(19) Europäisches Patentamt
European Patent Office
Office européen des brevets

(11) Veröffentlichungsnummer: **0 108 924**
**B1**

(12) # EUROPÄISCHE PATENTSCHRIFT

(45) Veröffentlichungstag der Patentschrift: **02.07.86**

(21) Anmeldenummer: **83110062.3**

(22) Anmeldetag: **08.10.83**

(51) Int. Cl.⁴: **C 09 B 50/00**, C 09 B 62/018, C 09 B 62/038, C 07 D 239/42, C 07 D 251/42, C 07 C 103/44, C 07 C 103/82, C 07 C 143/64 // D06P1/00

(54) **Schwermetallhaltige Formazanfarbstoffe, Verfahren zu ihrer Herstellung und ihre Verwendung zum Färben und Bedrucken von Fasermaterialien.**

(30) Priorität: **23.10.82 DE 3239364**

(43) Veröffentlichungstag der Anmeldung: **23.05.84 Patentblatt 84/21**

(45) Bekanntmachung des Hinweises auf die Patenterteilung: **02.07.86 Patentblatt 86/27**

(84) Benannte Vertragsstaaten: **CH DE FR GB LI**

(56) Entgegenhaltungen:
**FR-A-1 217 738**
**FR-A-1 396 903**
**FR-A-1 580 134**
**FR-A-2 368 521**
**US-A-3 057 919**
**US-A-3 497 493**
**US-A-3 789 125**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Weitz, Robert, Dr., Roggendorfstrasse 67, D-5000 Köln 80 (DE)**

EP 0 108 924 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue, schwermetallhaltige Formazanfarbstoffe der allgemeinen Formel

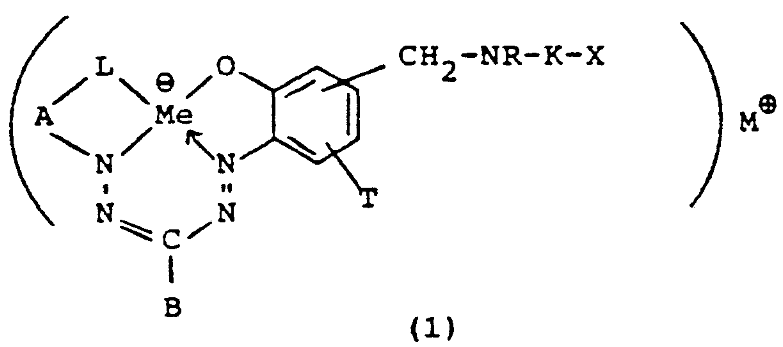

(1)

in welcher

A = gegebenenfalls substituiertes Phenylen oder gegebenenfalls substituiertes Naphthylen,

B = Wasserstoff, Cyan, gegebenenfalls substituiertes Alkyl ($C_1$-$C_8$), gegebenenfalls substituiertes Alkylen ($C_2$-$C_8$), gegebenenfalls substituiertes Phenyl, gegebenenfalls substituiertes Naphthyl, gegebenenfalls substituierter heterocyclischer Rest

Me = Kupfer oder Nickel

L = Sauerstoffatom oder die Carboxylgruppe, wobei sich die Bindung A-L in ortho-Stellung zur Bindung A-N befindet,

M = Wasserstoffatom oder ein Metalläquivalent,

R = Wasserstoff oder Alkyl ($C_1$-$C_4$)

K = direkte Bindung oder ein zweiwertiges Brückenglied,

T = Alkyl ($C_1$-$C_8$), gegebenenfalls substituiertes phenyl, Halogen, Alkoxy ($C_1$-$C_4$), Carboxy oder $SO_3H$

X = nichtreaktiver Carbonyl- oder Sulfonylrest oder- Monofluortriazinyl-, Trihalogenpyrimidinyl-, Dihalogenpyrimidinyl-, 2,3-Diklorchinoxalin-6-Carbonyl-, 2,3-Dichlorchinoxalin-6-Sulfonylrest oder aliphotischer Reaktivrest wobei die Reste A und/oder B mindestens eine wasserlöslichmachende Gruppe enthalten.

Als Substituenten kommen für den Rest A vorzugsweise in Frage:

$SO_3H$, COOH, Alkyl ($C_1$-$C_5$), Halogen, Nitro, Alkoxy ($C_1$-$C_4$), Alkylsulfonyl ($C_1$-$C_4$), Phenylsulfonyl, Sulfamoyl, N-Mono- und N,N-Dialkylsulfamoyl mit jeweils 1 bis 4 C-Atomen im Alkylteil.

Als Substituenten kommen für B = substituiertes Alkyl ($C_1$-$C_8$) und/oder B = substituiertes Alkylen ($C_2$-$C_8$) vorzugsweise in Frage: $SO_3H$, COOH, Phenyl, Phenyl substituiert durch $SO_3H$, COOH, Methyl, Ethyl, Methoxy, Ethoxy, Fluor, Chlor, Brom oder Sulfamoyl.

Für B = substituiertes Phenyl oder B = substituiertes Naphthyl kommen als Substituenten vorzugsweise in Frage:

$SO_3H$, COOH, OH, $NO_2$, Halogen, Alkyl ($C_1$-$C_5$), Amino, Acylamino ($C_1$-$C_5$), Alkoxy ($C_1$-$C_4$), Carbalkoxy ($C_1$-$C_4$).

Als heterocyclische Reste B kommen vorzugsweise Reste folgender heteroaromatischer Systeme in Frage: Furan, Thiophen, Pyrrol, Imidazol, Indol, Pyrazol, Pyridin, Pyrimidin, Chinolin oder Benzimidazol. Als Substituenten dieser heterocyclischen Systeme seien aufgeführt:

1. Substituenten an den aromatischen Kohlenstoffatomen der Heterocyclen: $SO_3H$, COOH, Cl, Phenyl, Methoxy, Ethoxy, Methyl und Ethyl,

2. Substituenten in den NH-Gruppen dieser Heterocyclen: Methyl, Ethyl oder Benzyl.

Als Metalläquivalent M kommt vorzugsweise ein Metalläquivalent folgender Metalle in Frage: Na, K, Li, Ca.

Als Brückenglieder K seien vorzugsweise die folgenden genannt:

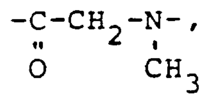

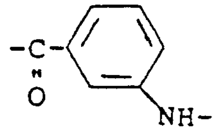

,

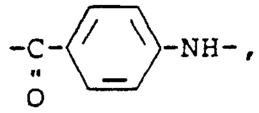

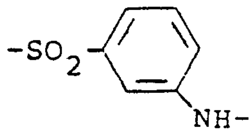

,

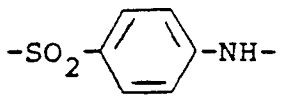

Für T = Alkyl ($C_1$-$C_8$) steht vorzugsweise Methyl oder Ethyl.

Als Substituenten kommen für T = substituiertes Phenyl vorzugsweise in Frage: $NO_2$, Halogen, $C_1$-$C_5$-Alkyl, Carboxy oder die Sulfonsäuregruppe.

T = Halogen steht vorzugsweise für Cl, F oder Br.

Folgende nichtreaktive Carbonyl- oder Sulfonylreste X sind bevorzugt: Alkyl($C_1$-$C_5$)carbonyl, Alkyl($C_1$-$C_5$)-sulfonyl, Arylcarbonyl oder Arylsulfonyl.

Insbesondere seien genannt:

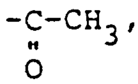, 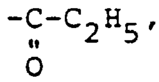, 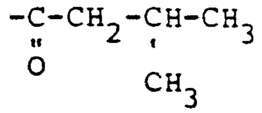, 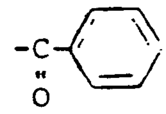,

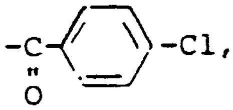, 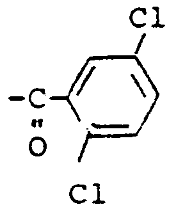, 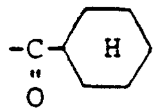, 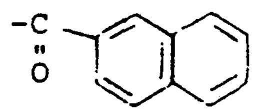,

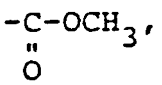, 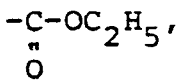, 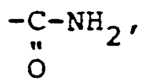, 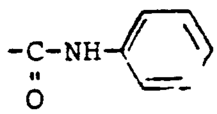,

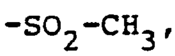, 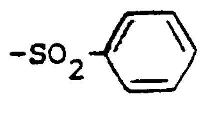, 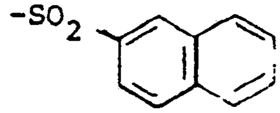

Unter Reaktivgruppen X werden solche verstanden, die eine oder mehrere reaktive Gruppen oder abspaltbare Substituenten aufweisen, welche beim Aufbringen de Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in großer Zahl bekannt.

Monofluortriazinylreste, die durch Amino-, Alkylamino-, Aralkylamino, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-$C_1$-$C_4$-Alkyl und Aryl, insbesondere gegebenenfalls durch Sulfo-, Alkyl-, insbesondere $C_1$-$C_4$-Allyl, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methyl-amino-4-fluor-triazinyl-6, 2-Ethylamino-4-fluor -triazinyl -6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluortriazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethylamino-4-fluor-triazinyl -6, 2-Benzylamino-4-fluor-triazinyl-6, 2-β-Phenyl-ethylamino-4-fluor-triazinyl-6, 2-Benzyl-methylamino-4-fluor-triazinyl-6, 2-(2 -Sulfo-benzyl)-amino-4-fluor-triazinyl-6, 2-Cyclohexylamino-4-fluor-triazinyl-6,

2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,

2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-5-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,
2-(N-Methylphenyl)-amino-4-fluor-triazinyl-6,
2-(N-Ethylphenyl)-amino-4-fluor-triazinyl-6,
2-(N-β-Hydroxyethylphenyl)-amino-4-fluor-triazinyl-6,
2-N(iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxy-methyl- oder -5-carboxy- oder -5-cyano- oder -5-vinyl-oder -5-sulfo- oder -5-mono-, -di- oder -trichlormethyl- oder -5-carboalkoxy-pyrimidinyl-6-, 2,6-Di-chlorpyrimidin-4-carbonyl-, 2,4-Dichlorpyrimidin-5-carbonyl-, 6-Methyl-2,4-dichlor-pyrimidin-5-carbonyl-, 2,4,6-Trichlorpyrimidin-5-carbonyl-, 2,4-Dichlorpyrimidin-5-sulfonyl-, 2,3-Dichlorchinoxalin-6-carbonyl-, 2,3-Dichlorchinoxalin-6-sulfonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise, 2,6-Di-fluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyri-midinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Flour-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 2-Fluor-5-brom-6-trifluormethyl-4-pyrimidinyl-, 2,6-Difluor-5-methylsulfonyl-4-pyrimidinyl-, 2-Fluor-5-chlor-6-carbomethoxy-4-pyrimidinyl-, 2,6-Difluor-5-trifluormethyl-4-pyrimi-dinyl,

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, β-Sulfatoethylaminosulfonyl-, Vinylsulfonyl-, β-Chlorethylsulfonyl-, β-Sulfatoethylsulfonyl-, β-Methylsulfonylethylsulfonyl-, β-Phenylsulfonylethylsulfonyl-, 2-Fluor-2-chlor-3,3-difluorcyclobutancarbonyl-1-, 2,2,3,3-Tetrafluorcyclobutancarbonyl-1- oder -sulfonyl-1-, β-(2,2,3,3-Tetrafluorcyclobutyl-1)-acryloyl-, α- oder β-Bromacryloyl-,α - oder β-Alkyl- oder Arylsulfonylacryloyl, wie α - oder β-Methylsulfonylacryloyl.

Besonders bevorzugt sind folgende schwermetallhaltige Formazanfarbstoffe der Formeln (2) bis (4):

Farbstoffe der Formel (2)

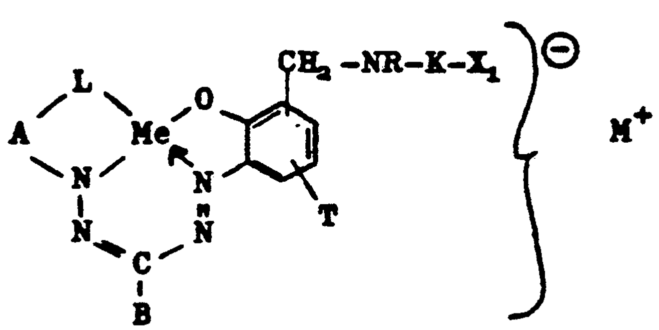

(2)

worin A, B, Me, L, M, T, R und K die unter Formel (1) angegebene Bedeutung haben und $X_1$ den Rest einer Reaktivkomponente bedeutet.

Farbstoffe der Formel (3)

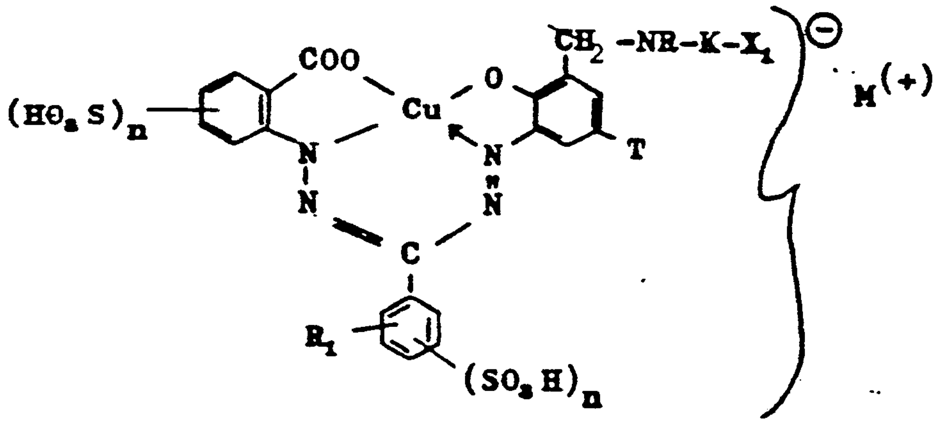

(3)

worin
R,K,M,$X_1$ und T die unter Formel (1) angegebene Bedeutung haben und
Cu Kupfer,
n eine Zahl zwischen 0 und 2,
$R_1$ ein Wasserstoffatom oder ein Substituent aus der Gruppe Halogen, Methyl, Ethyl, Methoxy, Ethoxy, Carboxy, Carbomethoxy, Carboethoxy- und Nitro bedeutet.

Farbstoffe der Formel (4)

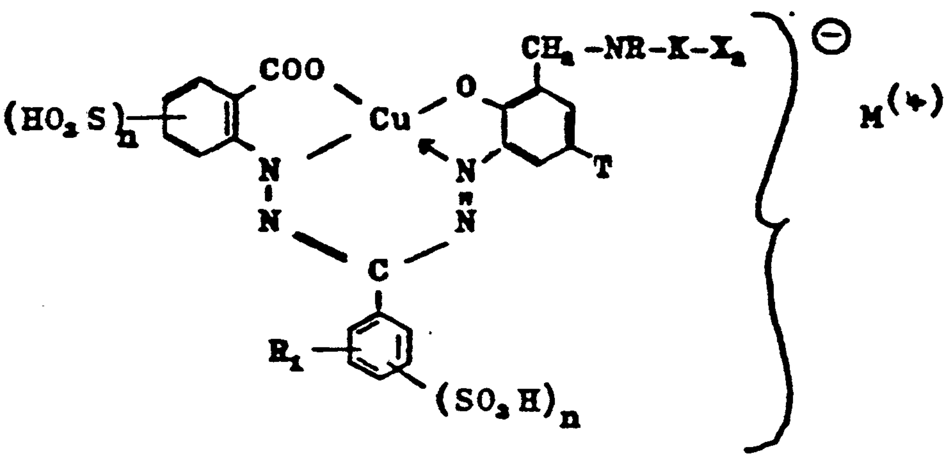

(4)

worin
R,K,M,n,$R_1$ und T die unter Formel (3) angegebene Bedeutung haben und
Monofluortriazinyl, Trihalogenpyrimidinyl, Dihalogenpyrimidinyl-, wie Trichlor-, Difluormonochlor, Dichlor-, Monofluormonochlor-, 2,3-Dichlorchinoxalin-6-carbonyl oder einen reaktiven aliphatischen Rest bedeutet.

Bevorzugt sind Formazanfarbstoffe der allgemeinen Formel (1) welche ein oder zwei gleiche oder verschiedene wasserlöslichmachende Gruppen, wie $SO_3H$ und COOH im Molekül enthalten.

Die neuen Verbindungen der Formel (1) können in saurer Form vorliegen (d.h. M = Wasserstoff). Bevorzugt sind jedoch die Salze (d.h. M = ein Metalläquivalent), insbesondere die Alkali- und Erdalkalimetallsalze. Sie finden, bevorzugt in Form der Alkalimetallsalze Verwendung zum Färben und Bedrucken von hydroxylgruppenhaltigen, amino- und carbonamidgruppenhaltigen Materialien.

Von den erfindungsgemäßen Verbindungen der allgemeinen Formel (1) sind weiterhin diejenigen bevorzugt, in welchen A den Phenylenrest bedeutet, der durch einen Substituenten aus der Reihe Chlor, Brom, Nitro, Methyl, Ethyl, Methoxy, $SO_3H$, COOH, Ethoxy, Carbomethoxy, Carboethoxy, Sulfamoyl und N,N-Dimethylsulfamoyl substituiert sein kann, B den Phenylrest bedeutet, der durch 1 oder 2 Substituenten aus der Gruppe $SO_3H$, COOH, Chlor, Methyl, Ethyl, Hydroxy, Methoxy, Ethoxy, Carbomethoxy, Carbethoxy und Nitro substituiert sein kann und M, T, L, R, K, Me und X die obengenannten Bedeutungen haben. Insbesondere bevorzugt sind Verbindungen der Formel (1), in welchen Me Kupfer ist und A den Phenylenrest darstellt, der durch eine $SO_3H$, COOH, Methyl-, Ethyl-, Methoxy- oder Ethoxygruppe oder ein Chloratom substituiert sein kann, B den Phenylrest bedeutet, der durch eine $SO_3H$-, COOH-, Methyl-, Ethyl-, Methoxy- oder Ethoxygruppe oder durch ein Chloratom substituiert sein kann, L den Carbonyloxyrest darstellt und M, T, R, K und X die obengenannte Bedeutung hat.

Insbesondere sind Verbindungen der Formel (1) bevorzugt, in welchen L den Carboxylrest darstellt, A der

Phenylenrest ist, der durch die Sulfogruppe, vorzugsweise in m- oder p-Stellung zum Stickstoffatom, substituiert ist, B den Phenylrest bedeutet, der durch die Sulfogruppe oder durch ein Chloratom, das vorzugsweise in 2- oder 4-Stellung gebunden ist, substituiert sein kann, T für Methyl, Ethyl, Chlor, Carboxy oder Sulfo steht, und M, R, K und X die obengenannte Bedeutung hat.

Die vorliegende Erfindung betrifft weiterhin Verfahren zur Herstellung der obengenannten und definierten Verbindungen der allgemeinen Formel (1). Die Verfahren sind dadurch gekennzeichnet, daß man eine aromatische Hydrazonverbindung der allgemeinen Formel (5)

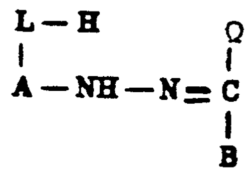

(5)

in welcher
A,B,L die obengenannten Bedeutungen haben und
Q Wasserstoff oder einen durch die Azokupplung ersetzbaren Substituenten, wie z.B. die COOH-gruppe darstellt,
mit der Diazoniumverbindung eines aromatischen Amins der Formel (6)

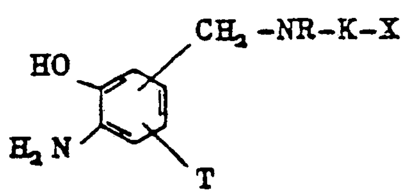

(6)

mit M, T, R, K und X der obengenannten Bedeutung und mit einem kupfer- oder nickelabgebenden Mittel umsetzt. Man kann hierbei in üblicher und analog bekannter Verfahrensweise zur Herstellung von Metallkomplexformazanen verfahren. Vorzugsweise wird das Verfahren bei einem pH-Wert von 4 bis 10, insbesondere von 7 bis 9 und bei einer Temperatur zwischen etwa 0 bis 20°C durchgeführt.

Die Zugabe der Reaktionskomponenten kann beliebig sein, jedoch läßt das Verfahren sich leicht als Dreikomponentenreaktion durchführen (Komponenten der Formeln (5) und (6) sowie kupfer- oder nickelabgebendes Mittel).

Bedeutet Q in Kupplungskomponenten der allgemeinen Formel (5) einen durch Azokupplung ersetzbaren Substituenten, so handelt es sich vorzugsweise um die Formyl- oder Carboxylgruppe oder um einen in die Carboxylgruppe überführbaren Substituenten, wie z.B. eine Cyan-, Carbonsäureester- oder Carbonsäureamidgruppe.

Als kupferabgebende Verbindungen kommen beispielsweise die einfachen und die komplexen Salze des Kupfers in Frage, wie beispielsweise Kupfersulfat, Kupferchlorid, Kupferacetat oder Kupfercarbonat und die Kupfersalze der Salicylsäure oder Weinsäure.

In analoger Weise kommen nickelabgebende Verbindungen in Betracht.

Verwendet man die Kupfersalze von Mineralsäuren, so arbeitet man zweckmäßig in Gegenwart eines säureabstumpfenden Mittels, wie beispielsweise eines Alkalioder Erdalkalihydroxides oder -carbonats oder eines Alkalisalzes einer niederen Alkancarbonsäure, wie der Essigsäure, oder eines basischen Alkalisalzes der Phosphorsäure. Diese Alkali- oder Erdalkaliverbindungen sind insbesondere die Natrium-, Kalium- und Calciumverbindungen, bevorzugt beispielsweise Natriumhydroxid, Kaliumhydroxid, Calciumhydroxid, Natrium und Kaliumcarbonat, Calciumcarbonat, Natriumacetat, Dinatriumhydrogenphosphat und Trinatriumphosphat.

Das kupferabgebende Mittel wird in äquimolaren Mengen verwendet, so daß auf eine zu bildende Verbindung der Formel (1) ein Kupferatom entfällt. Die Metallisierung geht üblicherweise schon bei Raumtemperatur zu Ende.

Die Herstellung der Kupferkomplexformazanverbindungen der allgemeinen Formel (1) kann man beispielsweise in der Weise durchführen, daß man die Hydrazonverbindungen der allgemeinen Formel (5) mit einem Alkali, wie Natronlauge oder Natriumcarbonat, in Wasser bei Raumtemperatur löst; vorzugsweise hält man den pH-Wert bei 7 bis 9. Anschließend gibt man die Diazoniumsalzlösung des Amins der allgemeinen Formel (6) hinzu, wobei man den pH-Wert der Reaktionslösung auf der einen Seite nicht zu stark alkalisch, auf der anderen Seite nicht zu stark sauer werden läßt, um zum einen die Diazogruppen im Alkalischen nicht zu schädigen und um zum anderen eine Ausfällung des Hydrazons und damit eine heterogene Reaktion im Sauren zu vermeiden. Vorzugsweise arbeitet man bei einem pH-Wert zwischen 4 bis 10, insbesondere 7 bis 9. Die Reaktionstemperatur soll zweckmäßig 20° C, vorteilhaft 15° C möglichst nicht überschreiten. Gleichzeitig, d.h. auch - zusammen mit -, oder nach der Zugabe der Diazoniumverbindung gibt man die äquimolare Menge an dem kupferabgebenden Mittel, beispielsweise als Kupfersulfat in wäßriger Lösung, hinzu. Auch die Metallisierungsreaktion wird vorteilhaft bei einem pH-Wert von 4 bis 10, insbesondere 7 bis 9, durchgeführt. Metallisierungs- und Kupplungsreaktionen können nebeneinander stattfinden. Die Metallisierungsreaktion verläuft verhältnismäßig schnell ab. Man isoliert die hergestellte erfindungsgemäße Metallkomplexformazanverbindung in üblicher Weise, beispielsweise durch Aussalzen mittels eines Elektrolyten, wie Natriumchlorid oder Kaliumchlorid. Die Verbindung kann gegebenenfalls auch durch Eindampfen der Lösung, wie beispielsweise Sprühtrocknung, isoliert werden. Die als Ausgangsverbindungen dienenden Hydrazonverbindungen der allgemeinen Formel (5) sind nach verschiedenen Methoden herstellbar. Man gewinnt sie z.B. aus den entsprechenden Phenyl- und Naphthylhydrazinen der allgemeinen Formel $H\text{-}L\text{-}A\text{-}NH\text{-}NH_2$ (mit A und L der obengenannten Bedeutungen), - die in an und für sich üblicher und bekannter Weise, beispielsweise aus den entsprechenden Diazoniumverbindungen von Aminen der Formel (9) mit Salzen der schwefligen Säure unter Hydrolyse der intermediären N-Sulfonsäuren mit Mineralsäuren hergestellt werden können, - vorzugsweise ohne deren Zwischenisolierung, durch Umsetzung mit einem Aldehyd der allgemeinen Formel B-CHO (mit B der obengenannten Bedeutung), wobei die Hydrazine und Aldehyde so ausgewählt werden müssen, daß sie insgesamt eine, zwei oder drei wasserlöslichmachende Gruppen an A und/oder B gebunden enthalten.

Aldehyde entsprechend der Formel B-CHO mit B der obengenannten Bedeutung, die als Ausgangsverbindungen zur Herstellung der Hydrazone der allgemeinen Formel (5) dienen, sind beispielsweise Benzaldehyd, 2-, 3- oder 4-Methyl-benzaldehyd, 4-Methylbenzaldehyd-3-sulfonsäure, 2-, 3- oder 4-Methoxybenzaldehyd, 4-Methoxy-3-chlor-benzaldehyd, 3-Nitro-benzaldehyd, 2-Hydroxy-benzaldehyd, 3- oder 4-Acetylaminobenzaldehyd, 2- oder 4-Chlor-benzaldehyd, 2,4-Dichlor-benzaldehyd, 2-Chlor-benzaldehyd-5-sulfonsäure, Benzaldehyd 2-, 3- oder 4-Sulfonsäure, 4-Chlorbenzaldehyd-3-sulfonsäure, 4-Amino-benzaldehyd-2-sulfonsäure, 3-Amino-benzaldehyd-4-sulfon-säure, Benzaldehyd-2,4-disulfonsäure, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Acetaldehyd, Propionaldehyd, i- und n-Butyraldehyd, Oenanthaldehyd, Acrylaldehyd, Crotonaldehyd, Phenacetaldehyd oder Zimtaldehyd.

Zu Kupplungskomponenten der allgemeinen Formel (5) gelangt man auch, wenn man eine zweifach ankuppelbare H-B-Methin- oder -Methylen-verbindung mit einem Diazoniumsalz eines Amins der allgemeinen Formel (9)

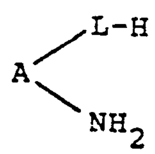

(9)

mit A und L in der vorstehenden Bedeutung kuppelt und hierauf nötigenfalls eine substituierte Carbonsäure- oder Nitrilgruppe zur Carboxylgruppe verseift. Als zweifach ankuppelbare Methylen- oder Methinverbindungen, welche nach erfolgter Kupplung am Methinkohlenstoffatom noch eine Carboxylgruppe oder einen in eine solche umwandelbaren Substituenten enthalten, verwendet man vorzugsweise z.B. Phenylformylessigsäurealkylester, sowie das entsprechende Nitril, ferner Chlorphenylformylessigsäurealkylester, Benzylformylessigsäurealkylester, Phenylcyanessigsäure, Phenylcyanessigsäurealkylester, Phenylcyanessigsäureamid, α-Phenylacetessigsäurealkylester, α-Phenylacetessigsäurenitril oder auch α-Naphthylformylessigsäurealkylester.

Als Amine der allgemeinen Formel (9) seien beispielsweise genannt:

2-Aminophenol, 4- oder 5-Methyl-2-aminophenol, 4- oder 5-Sulfo-2-aminophenol, 4-Sulfo-6-carboxy-2-aminophenol, 4-Methoxy-2-aminophenol, 5-Methylsulfonyl-2-amino-phenol, 4-Dimethylaminosulfamoyl, 5-Nitro-2-amino-phenol, 4-Brom-2-aminophenol, 1-Amino-2-hydroxy-naphthalin-4,6-disulfonsäure, 1-Amino-2-hydroxy-6-nitro-naphthalin-4-sulfonsäure, 1-Amino-2-hydroxy-6-chlor-naphthalin-4-sulfonsäure, 2-Amino-benzoesäure, 4- oder 5-Sulfo-2-aminobenzoesäure, 4- oder 5-Nitro-2-aminobenzoesäure, 4- oder 5-Chlor-2-aminobenzoe-säure, 5-Methoxy-2-aminobenzoesäure.

Die vorliegende Erfindung betrifft weiterhin ein Verfahren zur Herstellung schwermetallhaltiger Formazanfarbstoffe der Formel (1), indem man einen schwermetallhaltigen Aminomethyl-formazanfarbstoff der

Formel (7)

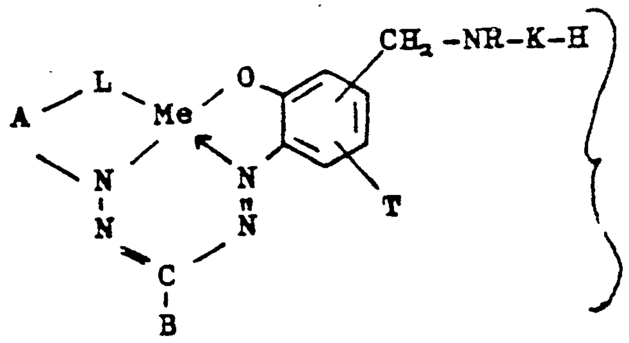

$M^{(+)}$ (7)

mit A, B, L, T, R, K und Me in der angegebenen Bedeutung, mit einer geeigneten Reaktivkomponente Y-X, die den faserreaktiven Rest X einführt, unter Abspaltung von H-Y umsetzt.

Bevorzugt sind die Ausgangsstoffe der Formel (7), in denen

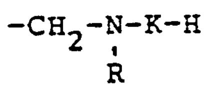

eine acylierbare Aminomethylgruppe bedeutet. Diese können beispielsweise durch Verseifung erfindungsgemäß erhältlicher Farbstoffe der Formel (1) erhalten werden, in denen X eine nicht reaktive Acylkomponente bedeutet.

Eine andere Methode zur Herstellung der Formazane der Formel (7), besteht in der Ankupplung von Hydrazonen der Formel (5) mit Aminen der Formel (6a)

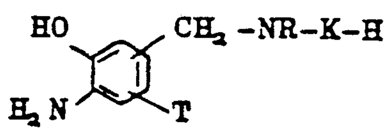

(6a)

in denen T,R, und K die angegebene Bedeutung haben, und mit einem kupfer- oder nickelabgebenden Mittel. Die Reaktion wird vorzugsweise im Neutralen bis schwach Alkalischen durchgeführt.

Eine weitere Methode zur Synthese von Formazanen der allgemeinen Formel (7) besteht in der Verwendung von Aminen (6c)

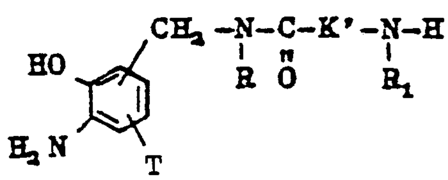

(6c)

mit T und R in der oben angegebenen Bedeutung, wobei $R_1$ = H, $C_1$-$C_4$-Alkyl, welches gegebenenfalls durch OH, $SO_3H$, $OSO_3H$ substituiert ist und K' Alkylen oder Arylen darstellt.

Eine weitere Methode zur Herstellung von Formazanen der Formel (1) besteht in analoger Weise in der Verwendung von Aminen der Formel (6b)

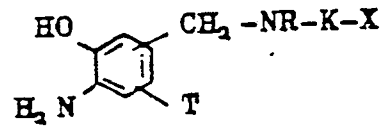

(6b)

in denen T, R und K die angegebene Bedeutung haben und X den Rest einer Reaktivkomponente bedeutet.

Für die Verfahren zur Herstellung der Formazanfarbstoffe der Formel (1) geeignete Reaktivkomponenten der Formel X-Y sind beispielsweise solche, die den vorgenannten Reaktivgruppen zugrundeliegen, d.h. im allgemeinen die Halogenide, insbesondere die Chloride der genannten Komponenten X. Aus der großen Zahl der zur Verfügung stehenden Verbindungen seien hier auszugsweise erwähnt:

2,4-Difluor-6-(o-, m-, p-Methyl-phenyl) amino-triazin, 2,4-Difluor-6-(o-, m-, p-sulfophenyl) amino-triazin, 2,4-Difluor-6-methoxy-triazin, 2,4-Di -fluor-6-(2',5'-disulfophenyl)-amino-triazin, 2,4-Di -fluor-6-(6'-sulfonaphthyl-2')-amino-triazin, 2,4-Di -fluor-6-(o-, m-, p-ethylphenyl)-amino-triazin, 2,4-Di -fluor-6-(o-, m-, p-chlorphenyl)-amino-triazin, 2,4-Di -fluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Difluor-6-(2'-chlor-5'-sulfophenyl)-amino-triazin, 2,4-Difluor-6-(2'-methoxy-4'-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Di -fluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzyl-amino-triazin, 2,4-Difluor-6-β-phenylethyl-amino-triazin, 2,4-Difluor-6-(X-sulfo-benzyl)-amino-triazin, 2,4-Difluor-6-(2',4'-disulfophenyl)-amino-triazin, 2,4-Difluor-6-(3',5'-disulfophenyl)-amino-triazin, 2,4-Difluor-6-(2'-carboxy-4'-sulfo-phenyl)-amino-triazin, 2,4-Difluor-6-(2',5'-disulfo-4-methoxyphenyl)-amino-triazin, 2,4-Difluor-(2'-methyl-4',6'-disulfophenyl) amino-triazin, 2,4-Difluor-(6',8'-disulfonaphthyl-(2')) amino-triazin, 2,4-Difluor-(4',8'-disulfonaphthyl-(2')) amino-triazin, 2,4-Difluor-(4',6',8'-trisulfo-naphthyl-(2'))-amino-triazin, 2,4-Difluor-(3',6',8'-trisulfo-naphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxy-ethoxy-triazin, 2,4-Difluor-6-methoxyethylamino-triazin, 2,4-Difluor-6-dimethylamino-triazin, 2,4-Difluor-6-di-ethylamino-triazin, 2,4-Difluor-6-iso-propylaminotriazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder -Trifluor-pyrimidin, 2,4,6-Tri-chlor-5-nitro- oder -5-methyl- oder -5-carbomethoxy-oder -5-carboethoxy- oder -5-carboxymethyl- oder -5-mono-, -di- oder trichlormethyl- oder -5-carboxy- oder -5-sulfo- oder -5-cyano- oder -5-vinyl-pyrimidin, 2,6-Difluor-4-methyl-5-chlorpyrimidin, 2,6-Difluor-4-chlor-pyrimidin, 2,4,6-Trifluor-5-chlor-pyrimidin, 2,6-Difluor-4-methyl-5-brompyrimidin, 2,4-Difluor-5,6-dichlor- oder -dibrompyrimidin, 4,6-Di-fluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlor-pyrimidin, 2,6-Difluor-5-chlorpyrimidin, 2,4,6-Tri-fluor-5-methylpyrimidin, 2,4,5-Trifluor-6-methylpyrimidin, 2,4-Difluor-5-nitro-6-chlorpyrimidin, 6-Tri-fluormethyl-5-chlor-2,4-difluorpyrimidin, 5-Trifluormethyl-2,4,6-trifluorpyrimidin, 2, 4, 6-Triflour-5-methylsulfonyl-pyridimin, 2, 4-Diflour-5-chlor-6-carbomethoxy-pyrimidin, 2,4,6-Trichlorpyrimidin-5-carbon-säurechlorid, 2,3-Dichlorchinoxalin-6-carbonsäurechlorid oder -6-sulfon-säurechlorid, 2,3-Dibromchinoxalin-6-carbonsäurebromid, oder -6-sulfonsäurebromid, N-Methyl-, N-Ethyl- oder N-Hydroxyethyl-N-(2,3-dichlorchinoxalin-6-sulfonyl- oder -6-carbonyl)-aminoacetylchlorid

Aus der Reihe der aliphatischen Reaktivkomponenten sind beispielsweise zu erwähnen:

Acrylsäurechlorid, Mono-, Di- oder Trichlor-acrylsäurechlorid, 3-Chlorpropionsäurechlorid, 3-Phenylsulfonylpropionsäurechlorid, 3-Methylsulfonyl-propionsäure-chlorid, 3-Ethyl-sulfonylpropionsäurechlorid, 3-Chlorethansulfochlorid, Chlormethansulfochlorid, 2-Chlor-acetylchlorid, 2,2,3,3-Tetrafluorcyclobutan-1-carbon-säurechlorid, β-(2,2,3,3-Tetrafluorcyclobutyl-1)-acryl-säurechlorid, β-(2,3,3-Trifluor-2-chlorcyclobutan-1)-carbonsäurechlorid, β-Methylsulfonyl-acrylsäurechlorid, α-Methylsulfonyl-acrylsäurechlorid und α-

Bromacrylsäurechlorid und β-Bromacrylsäurechlorid.

Führt die Umwandlung zu Farbstoffen, die mehr als eine reaktive Gruppe im Rest oder an anderer Stelle des Farbstoffmolekuls aufweisen, so können diese teilweise durch andere Reste, beispielsweise Aminoreste ersetzt werden, die ihrerseits reaktive Gruppen, z.B. in Form veresterter Oxalkylgruppen, aufweisen können. Grundsätzlich ist die Anwesenheit zweier oder mehrerer voneinander verschiedener Reaktivgruppen im Farbstoff möglich.

Gegenstand der Erfindung sind weiterhin Amine der allgemeinen Formel (6) sowie Verfahren zu ihrer Herstellung. Hierzu kann man beispielsweise o-Nitrophenolderivate der allgemeinen Formel (8)

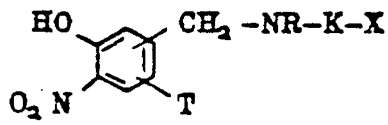

(8)

wobei T, R, K und X die angegebene Bedeutung haben, zu den Aminen (6) reduzieren. Die Reduktion kann nach den üblichen, für o-Nitrophenole bekannten Methoden geschehen, beispielsweise durch katalytische Hydrierung, Reduktion mit Hydrazinhydrat oder mit Alkalibzw. Ammoniumsulfiden. Bevorzugt ist die katalytische Hydrierung unter 10 bis 50 bar Wasserstoffdruck, Temperaturen zwischen 20 und 100° C je nach Lösungsmittel und üblichen Katalysatoren wie Pt, Pd-Aktivkohle oder Ranay-Nickel.

Die Verbindungen der Formel (8) lassen sich durch Umsetzung von o-Nitrophenol-Verbindungen (mit T als Substituenten) und N-Methylol-Verbindungen, wie z.B. N-Methylol-chloracetamid, -dichloracetamid, -trichloracetamid, -phthalimid oder -benzamid, oder auch einfach Mischungen der entsprechenden Amide mit mindestens der äquivalenten Menge Formaldehyd, bevorzugt Paraformaldehyd, in guten Ausbeuten gewinnen. Diese Amidomethylierung entspricht dem Typ der Einhorn-Tscherniak-Reaktion (Houben-Weyl XI/1 (1957), 795, Synthesis 1970, 49) und läßt sich in einer Variante der Herstellung von Verbindungen der Formel (8) auch auf Phenole, die durch T substituiert sind, anwenden, worauf anschließend die Nitrierung zu (8) nach bekannten Methoden erfolgt.

Eine weitere Möglichkeit zur Herstellung von Aminen der Formel (6) besteht darin, daß man o-Aminophenole der Formel (9)

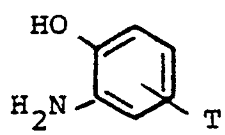

(9)

(mit T in der oben genannten Bedeutung) durch Umsetzung mit N-Methylol-Verbindungen, wie den oben genannten, direkt zu (6) umsetzt. Als Reaktionsmedium kommen zum Beispiel Kondensationsmittel wie konzentrierte Salzsäure, Chlorzink, Phosphorpentoxid, Essigsäureanhydrid, sirupöse Phosphorsäure, Aluminiumchlorid-Pyridingemische und Oleum in Frage. Das bevorzugte Kondensationsmittel ist jedoch konzentrierte bis wasserfreie Schwefelsäure, da sie gleichzeitig als Lösungsmittel für die Reaktionspartner dienen kann.

Der Rest X in den Verbindungen der Formel (8) ist variabel, da sich die über die obengenannte Reaktion eingeführten Acylreste X nach bekannten Methoden, z.B. saure oder alkalische Verseifung abspalten lassen. Neue Reste X lassen sich nun durch eine Vielzahl von Acylkomponenten X - Y unter Abspaltung von H - Y einführen. Als Beispiele für nicht reaktive Acylkomponenten seien genannt: Acetylchlorid, Acetanhydrid, Propionylchlorid, Isovaleroylchlorid, Benzoylchlorid, 4-Chlorbenzoylchlo-rid, 2,5-Dichlorbenzoylchlorid, Cyclohexancarbonsäurechlorid, β-Naphthoylchlorid, Diphenylcarbonsäurechlorid, Phenylessigsäurechlorid, Chlorameisensäuremethylester, Chlorameisensäureethylester, Chlorameisensäureisopropylester, Methylisocyanat, Phenylisocyanat, Methylsulfonsäurechlorid, Benzolsulfonsäurechlorid, β-Naphthalinsulfonsäurechlorid.

Eine Methode zur Herstellung ebenfalls bevorzugter o-Nitrophenol-Verbindungen (8c), die durch Reduktion direkt zu den Aminen (6c) führen, besteht im Austausch von $R_2$ in (8d) mit Aminen $R_1$-$NH_2$.

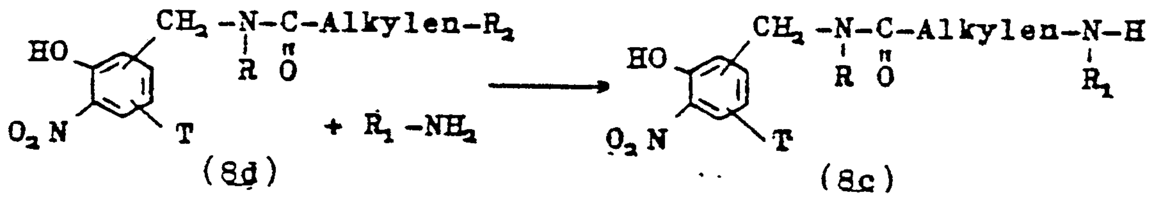

(8d) (8c)

Hierbei ist $R_2$ ein austauschfähiger Substituent wie z.B. Halogen, Sulfato, Alkylsulfonyl, Arylsulfonyl. $R_1$ ist H, $C_1$-$C_4$-Alkyl, welches gegebenenfalls durch OH, $SO_3H$, $OSO_3H$ substituiert ist und Alkylen = Alkylenreste oder Cycloalkylenreste mit 1 bis 6 Kohlenstoffatomen, welche gegebenenfalls durch O oder S unterbrochen sein können und welche gegebenenfalls durch OH, $SO_3H$, $OSO_3H$ substituiert sein können.

Derartige Reste Alkylen sind zum Beispiel Methylen, Ethylen, 1,2- und 1,3-Propylen, 1,2-, 1,3-, 1,4- und 2,3-Butylen, 2-Methyl-1,3-propylen, 2,2-Dimethyl-propylen, 1,5-Pentylen, 1,6-Hexylen, 1,3-Cyclohexylen, 1,4-Cyclohexylen, 2-Hydroxy-1,3-propylen,

$-CH_2-CH_2-O-CH_2-CH_2-$ und $-CH_2-CH_2-S-CH_2-CH_2-$.

Die neuen Farbstoffe der Formel (1) mit X = reaktivem Rest eignen sich zum Färben und Bedrucken von Hydroxyl-oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die neuen Farbstoffe der Formel (1) mit X = nicht reaktivem Carbonyl- oder Sulfonylrest eignen sich zum Färben und Bedrucken von natürlichen und synthetischen Fasermaterialien, insbesondere Stickstoffatome aufweisenden Fasermaterialien wie Wolle und Polyamidfasern, wobei unter Polyamidfasern insbesondere solche aus synthetischen Polyamiden wie ε-Polycaprolactam oder Kondensationsprodukten aus Adipinsäure und Hexamethylendiamin verstanden werden.

Die folgenden Beispiele sollen die vorliegende Erfindung veranschaulichen, ohne sie darauf zu limitieren. Die Temperaturen sind in Grad Celsius angegeben, Teile bedeuten Gewichtsteile und Prozentangaben beziehen sich auf Gewichtsprozente.

In der US-Patentschrift 4,024,123 werden konstitutionell nächstvergleichbare Farbstoffe mit Difluorchlorpyrimidinylaminogruppe beschrieben, in der Britischen patentschrift 1,511,730 nächstvergleichbare mit Monofluortriazinylaminorest. Die erfindungsgemäßen Farbstoffe zeigen gegenüber diesen Farbstoffen überraschende Verbesserungen.

**Herstellungsbeispiele**

**Beispiel 1**

40 Teile des Hydrazons aus 2-Carboxy-phenylhydrazin-5-sulfonsäure mit p-Sulfo-benzaldehyd werden in 100 Teilen Wasser aufgeschlämmt und durch Zugabe von wäßriger Natronlauge bei einem pH-Wert von 8-9 gelöst. Diese Lösung wird bei 0-10°C mit der wäßrigen Diazoniumsalz: lösung aus 19,4 Teilen 4-Methyl-6-N-acetylaminomethyl-2-aminophenol, welche durch übliche Diazotierung in wäßrigsalzsaurer Lösung dieses Aminophenols mit Natriumnitrit in Form einer wäßrigen Lösung erhalten wurde, sowie 100 Volumenteilen einer wäßrigen 1-molaren Kupfersulfatlösung innerhalb 45 Minuten versetzt, wobei man mit wäßriger Natronlauge den pH-Wert zwischen 7,5 und 9 hält. Man rührt noch 1 bis 2 Stunden bis zur Beendigung der Kupplung nach, deren Verlauf dünnschichtchromatographisch verfolgt werden kann.

Der Kupfer-Komplex des Formazans wird durch Zugabe von Natriumchlorid ausgesalzen, abfiltriert und in 10 %iger wäßriger Natronlauge bei ca. 90°C zur Verseifung der Acetylaminogruppe gerührt. Nach dem Abkühlen wird der pH-Wert der Lösung mit wäßriger Salzsäure auf 4 bis 5 gestellt und und das Formazan der Formel

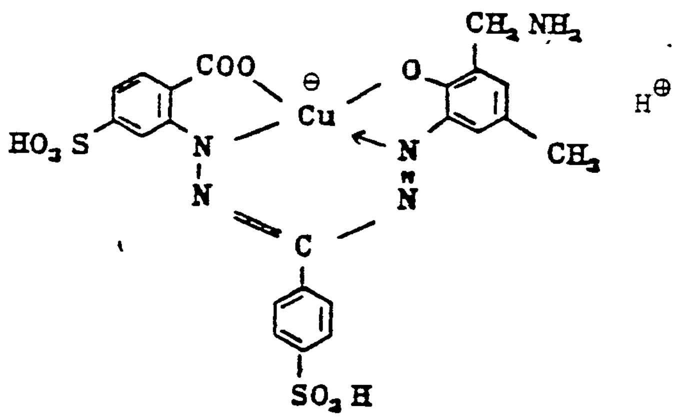

isoliert, welches nach dem Trocknen ein dunkles pulver darstellt, das sich in Wasser mit blauer Farbe löst.

**Beispiel 2**

Der Farbstoff (erhalten nach den Angaben in Beispiel 1) wird in 300 Teilen Wasser gelöst, der pH-Wert mit 2 N Natronlauge auf 8,8-9,0 gestellt. Bei 0-5°C tropft man 16,9 Teile 2,4,6-Trifluor-5-chlorpyrimidin zu. Gleichzeitig hält man den pH-Wert des Reaktionsgemisches bei 8,8-9,0 durch Zugabe von 2N-Natronlauge. Gegen Reaktionsende erwärmt man langsam auf 35-40°C und fällt den gebildeten Reaktivfarbstoff nachstehender Formel, nachdem man mit verdünnter Salzsäure auf pH 6,5-7 eingestellt hat, mit Natriumchlorid aus, filtriert ab und trocknet bei 50-60°C.

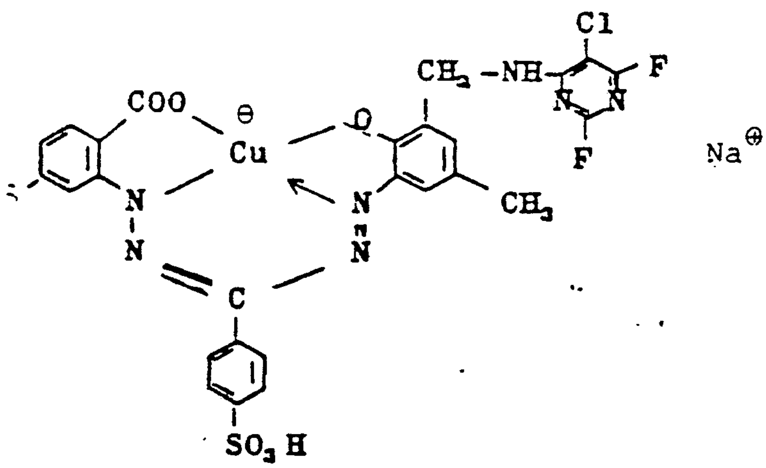

Er stellt ein dunkles pulver dar, das sich in Wasser mit blauer Farbe löst und Baumwolle in kräftigen blauen Tönen färbt.
λ(max) in $H_2O$: 608 nm

**Beispiel 3**

Verwendet man an Stelle von 2,4,6-Trifluor-5-chlor-pyrimidin in Beispiel 2) 2,4,6-Trifluor-1,3,5-triazin und Anilin-3-sulfonsäure, erhält man analog den Farbstoff der Formel

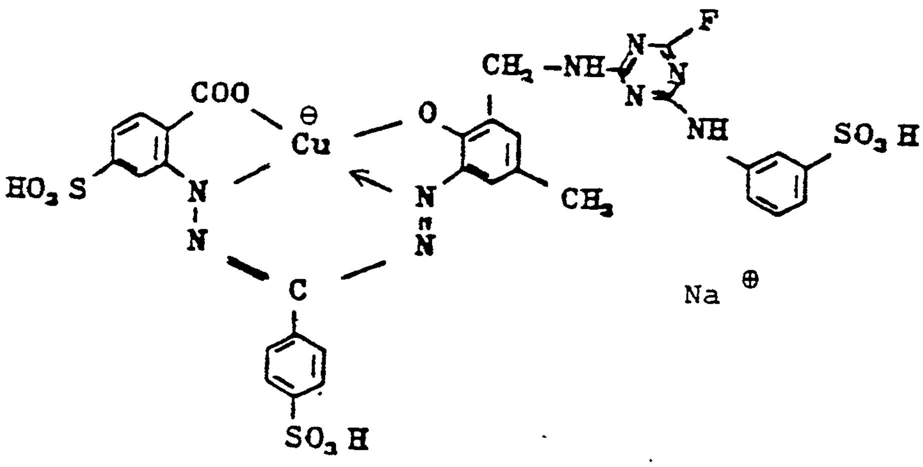

der ebenfalls auf Baumwolle kräftige blaue Färbungen mit hervorragenden Echtheiten liefert.

Hierbei ist es zweckmäßig, wenn man zuerst die Kondensation von 2,4,6-Trifluor-1,3,5-triazin und Anilin-3-sulfonsäure bei 0°C und pH = 3,5 nach bekannten Verfahren durchführt und dann in die farblose Lösung des Monokondensationsproduktes die Farbstofflösung zugibt. Die Kondensation erfolgt analog den Angaben von Beispiel 2).

λ (max) in $H_2O$: 607 nm

Weitere blaue Farbstoffe erhält man, wenn man anstelle von Anilin-3-sulfonsäure äquivalente Mengen der nachfolgenden Amine einsetzt:

**Beispiel Nr.**

4 Anilin-2-sulfonsäure
5 Anilin-4-sulfonsäure
6 Anilin-N-methansulfonsäure
7 2-Amino-5-sulfobenzoesäure
8 2-Aminotoluol-5-sulfonsäure
9 4-β-Sulfatoethylsulfon-anilin
10 2-Chloranilin-5-sulfonsäure
11 Anilin-2,5-disulfonsäure
12 2-Naphthylamin-6-sulfonsäure

**Beispiel 13 - 39**

Verwendet man anstelle des Hydrazons aus Beispiel 1) die in der folgenden Tabelle in Spalte 1 angegebenen Hydrazone und verfährt analog den Angaben in Beispiel 1) und acyliert die Aminomethylformazane mit den in der Spalte 3 genannten Reaktivkomponenten analog den Angaben in Beispiel 2), so erhält man weitere Reaktivfarbstoffe, die Baumwolle in blauer Nuance mit hervorragenden Echtheiten färben.

Tabelle I

| Beispiel | Hydrazon aus Aldehydkomponente | + Hydrazin | Reaktivkomponente |
|---|---|---|---|
| 13 | Benzaldehyd-2-sulfonsäure | 2-Carboxy-4-sulfophenyl-hydrazin | 2,4,6-Trifluor-5-chlor-pyrimidin |
| 14 | " | 2-Carboxy-5-sulfophenyl-hydrazin | " |
| 15 | " | " | 2,4-Difluor-5-chlor-6-methyl-pyrimidin |
| 16 | Benzaldehyd-3-sulfonsäure | " | 2,4,6-Trifluor-5-chlor-pyrimidin |
| 17 | " | " | 2,4-Difluor-5-chlor-6-methyl-pyrimidin |
| 18 | " | " | 2-Amino-4,6-difluor-triazin |
| 19 | " | " | 2-Methylamino-4,6-difluor-triazin |
| 20 | " | " | 2-Phenylamino-4,6-difluor-triazin |
| 21 | " | " | 2-(3'-Sulfophenylamino)-4,6-difluor-triazin |
| 22 | " | " | 2-(4'-Sulfophenylamino)-4,6-difluor-triazin |
| 23 | " | " | 2-(2'-Methyl-5'-sulfophenyl-amino)-4,6-difluortriazin |
| 24 | " | " | 2-(2'-Chlor-4'-sulfophenyl-amino)-4,6-difluortriazin |
| 25 | " | " | 2-(6'-Sulfonaphthyl-2'-amino)-4,6-difluor-triazin |
| 26 | " | " | 2-Methoxyethoxy-4,6-difluor-triazin |
| 27 | Benzaldehyd-2,4-disulfon-säure | " | 2,4,6-Trifluor-5-chlor-pyrimidin |
| 28 | " | " | 2,4-Difluor-5-chlor-6-methyl-pyrimidin |

**Tabelle II**

| Beispiel | Hydrazon aus Aldehydkomponente | + Hydrazin | Reaktivkomponente |
|---|---|---|---|
| 29 | Benzaldehyd-2,4-disulfonsäure | 2-Carboxy-phenylhydrazin | 2,4-Difluor-5-chlor-6-methyl-pyrimidin |
| 30 | " | " | 2,4,6-Trifluor-5-chlor-pyrimidin |
| 31 | " | " | 2-Amino-4,6-difluor-triazin |
| 32 | " | " | 2-(2'-Sulfophenylamino)-4,6-difluor-triazin |
| 33 | " | " | 2-(3'-Sulfophenylamino)-4,6-difluor-triazin |
| 34 | " | " | 2-(4'-Sulfophenylamino)-4,6-difluor-triazin |
| 35 | " | " | 2-(6'-Sulfonaphthyl-2'-amino)4,6-difluor-triazin |
| 36 | " | " | 2-Methoxyethoxy-4,6-difluor-triazin |
| 37 | 4-Carboxy-benzaldehyd | 2-Carboxy-5-sulfophenyl-hydrazin | 2-(3'-Sulfophenylamino)-4,6-difluor-triazin |
| 38 | " | " | 2-Methoxyethoxy-4,6-difluor-triazin |
| 39 | " | " | 2,4,6-Trifluor-5-chlor-pyrimidin |

**Beispiel 40**

259 Teile des o-Nitrophenols der Formel

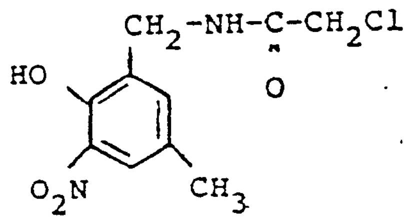

(gewonnen durch Kondensation von äquimolaren Mengen 4-Methyl-2-nitro-phenol und N-Methylolchloracetamid in konzentrierter Schwefelsäure; $^1H$-NMR-Spektrum ($D_6$-DMSO): $\delta$ = 2,25 ppm (s, 3H, $CH_3$), $\delta$ = 4,15 ppm (s, 2H, $CH_2$), $\delta$ = 4,27 ppm (d, 2H, $CH_2$), $\delta$= 7,3 u. 7,65 ppm (dd, 2 H, arom. CH), $\delta$= 8,6 ppm (t, 1H, NH).) werden in 1000 Teilen 20 %iger wäßriger Salzsäure ca. 2 - 3 Stunden erhitzt bis zur vollständigen Verseifung. Das erhaltene 2-Nitro-4-methyl-6-aminomethyl-phenol fällt in der Kälte als Hydrochlorid aus und wird abfiltriert.

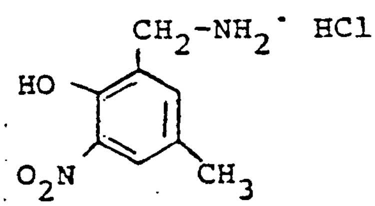

Die Ausbeute ist praktisch quantitativ. $^1H$-NMR-Spektrum ($D_6$-DMSO): $\delta$ = 2,3 ppm (s, 3H, $CH_3$), $\delta$ = 4,1 ppm (s, 2H, $CH_2$).

**Beispiel 41**

218 Teile des nach den Angaben von Beispiel 46) erhaltenen o-Nitrophenols werden bei ca. 80°C in 190 Teile Eisessig eingetragen, man gibt 90 Teile Natriumacetat zu und tropft dann 110 Teile Essigsäureanhydrid zu. Nach ca. 30 Minuten läßt man abkühlen und gießt auf 1000 Teile Wasser. Der gelbe Niederschlag des o-Nitrophenols der Formel

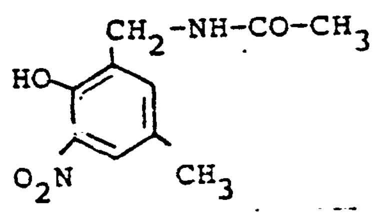

wird abfiltriert und mit Wasser säurefrei gewaschen. Die Ausbeute beträgt ca. 220 g. Fp: 139°C $^1H$ -NMR-Spektrum ($D_6$-DMSO): $\delta$ = i,95 ppm (s, 3H, $CH_3$), $\delta$= 2,3 ppm (s, 3H, $CH_3$), $\delta$= 4,3 ppm (d, 2H, $CH_2$), $\delta$= 7,35 und 7,7 ppm (dd, 2H, aromat. CH), $\delta$= 8,5 ppm (t, 1H, NH).

**Beispiel 42**

224 Teile des nach den Angaben von Beispiel 47) erhaltenen o-Nitrophenols werden in 600 Teilen Ethanol gelöst, 20 g Raney-Nickel zugegeben und im Autoklaven unter einem Wasserstoffdruck von 60 bar bei einer Temperatur von 50 bis 60°C bis zum Ende der Wasserstoffaufnahme behandelt. Man filtriert den Katalysator ab und säuert das Filtrat mit konz. wäßriger Salzsäure an, wobei man das o-Aminophenol der Formel

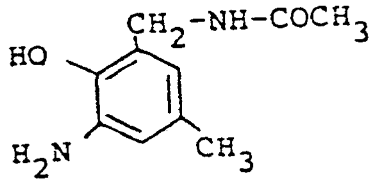

(4-Methyl-6-N-acetylaminomethyl-2-aminophenol) als Hydrochlorid erhält. $^1$H-NMR-Spektrum ($D_6$-DMSO): $\delta = 1{,}93$ ppm (s, 3H, $CH_3$), $\delta = 2{,}2$ ppm (s, 3H, $CH_3$), $\delta = 4{,}17$ ppm (d, 2H, $CH_2$), $\delta = 6{,}98$ und 7,15 ppm (dd, 2H, aromat. CH).

**Beispiel 43**

259 Teile des o-Nitrophenols (vergl. Beispiel 46)

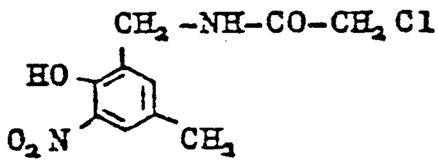

werden eingetragen in 900 ml einer wäßrigen 30 %igen Lösung von Methylamin. Man erwärmt mehrere Stunden aus 50°C bis der Chloraustausch in der Seitenkette beendet ist. Anschließend stellt man unter Einwerfen von Eis den Ansatz mit konzentrierter Salzsäure schwach sauer. Das ausgefallene produkt der Formel

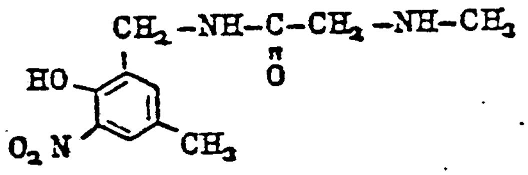

wird isoliert und mit Wasser aminfrei gewaschen. $^1$H -NMR-Spektrum ($D_6$-DMSO): $\delta = 2{,}3$ ppm (s, 3H, $CH_3$), $\delta = 2{,}65$ ppm (s, 3H, $CH_3$), $\delta = 3{,}9$ ppm (s, 2H, $CH_2$), $\delta = 4{,}4$ ppm (d, 2H, $CH_2$), $\delta = 7{,}6$ und 7,75 ppm (dd, 2H, aromat. CH)
Die Reduktion des Produktes analog den Angaben in Beispiel 42) führt zu dem o-Aminophenol der Formel

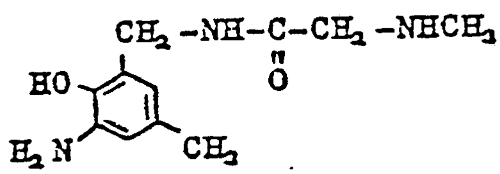

**Beispiel 44**

Setzt man 22,3 Teile des in Beispiel 43) gewonnenen o-Aminophenols in salzsaurer Lösung in üblicher Weise mit der wäßrigen Lösung von 6,9 Teilen Natriumnitrit bei 0 - 5°C um und verfährt mit der erhaltenen Diazoniumsalzlösung analog den Angaben in Beispiel 1), d.h. kuppelt auf das Hydrazon aus 2-Carboxyphenylhydrazin-5-sulfonsäure und m-Sulfobenzaldehyd und kupfert das Formazan, so erhält man den Farbstoff der Formel

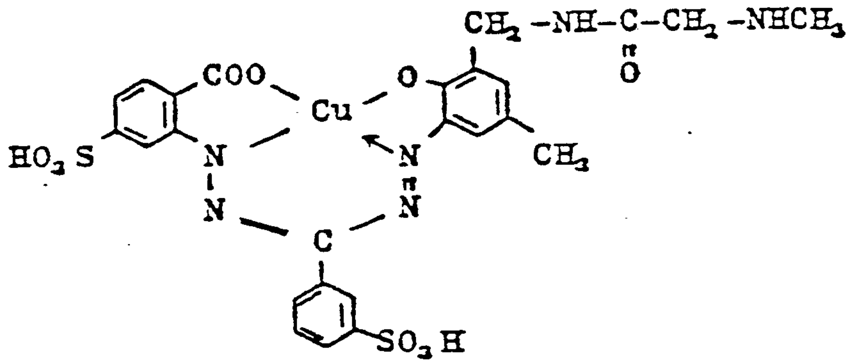

λ(max) in $H_2O$: 605 nm.
Das erhaltene Produkt wird in 250 Teilen Wasser bei pH-9,5 gelöst.

Zu einer Lösung von 17,3 Teilen 2-Aminobenzol-sulfon-säure in 110 Teilen Wasser werden bei 0 - 5°C 13,5 Teile Cyanurfluorid in 10 Minuten getropft. Dabei wird der pH-Wert mit 2 n Sodalösung auf 4,5 gehalten und nach beendeter Umsetzung auf 5,5 gestellt. Diese Lösung wird bei 0 - 5°C zu der oben erhaltenen Farbstofflösung gegeben und der pH-Wert mit 2 n Natronlauge auf 8 - 8,5 gehalten. Nach beendeter Umsetzung wird die Lösung auf 20°C erwärmt und der Farbstoff mit Natriumchlorid ausgesalzen.

Man saugt den Niederschlag ab und trocknet unter Zusatz von Phosphatpuffer bei 40°C im Vakuum. Der Farbstoff entspricht der Formel

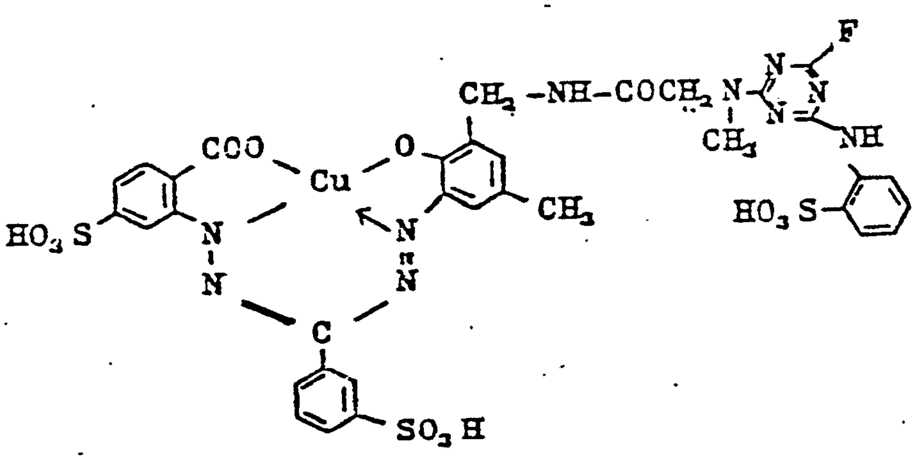

und färbt Cellulosefasern in blauen Tönen.
λ(max) in $H_2O$: 606 nm

**Beispiel 45**

28,6 Teile des o-Nitrophenols der Formel

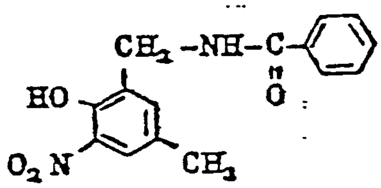

(erhalten durch Kondensation von 15,3 Teilen 4-Methyl-2-nitrophenol und 15,2 Teilen N-Methylolbenzamid in konz. Schwefelsäure; $^1$H-NMR-Spektrum ($D_6$-DMSO): $\delta$ = 2,27 pp, (s, 3H, $CH_3$), $\delta$ = 4,45 ppm (d, 2H, $CH_2$), $\delta$ = 7,2-7,9 ppm (Multiplett, 7H, aromat. C-H) werden analog den Angaben in Beispiel 42) zu dem o-Aminophenol der Formel

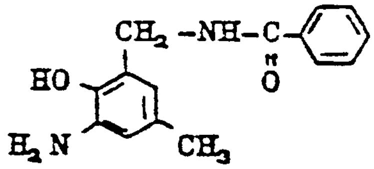

reduziert. Das als Feuchtpaste isolierte Hydrochlorid dieses Amins wird in wäßriger Salzsäure bei 0 - 5° C wie üblich mit 6,9 Teilen Natriumnitrit diazotiert.

Man löst 32 Teile des Hydrazons aus 2-Carboxy-phenylhydra-zin-4-sulfonsäure und Benzaldehyd in 200 Teilen Wasser bei pH = 9. Dann gibt man bei 0 - 5° C obige Diazoniumsalzlösung und 100 Teile einer 1-molaren wäßrigen Kupfersulfatlösung zu. Hierbei hält man den pH-Wert auf 8,5 bis 9 durch Zugabe von wäßriger 20 %iger Natronlauge. Nach beendeter Kupplung stellt man neutral und isoliert den Farbstoff der Formel

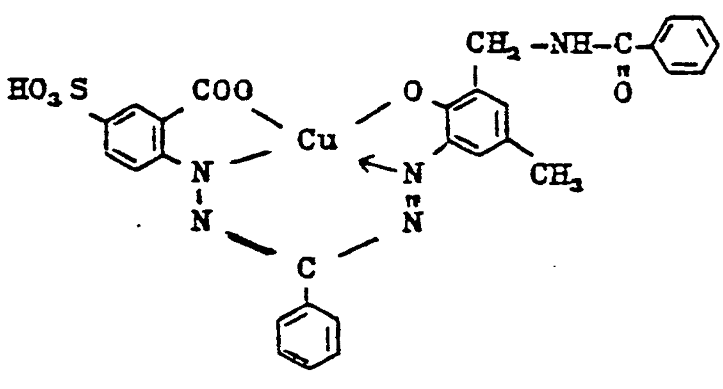

Dieser löst sich in Wasser mit blauer Farbe und färbt Wolle oder Polyamid in tiefen, dunkelblauen Tönen.

**Beispiel 46**

a) Man löst 128 Teile p-Chlorphenol in dem Gemisch aus 150 Teilen Essigsäure und 150 Teilen konz. Schwefelsäure. Bei einer Temperatur von 10 - 15° C gibt man über ca. 2 Stunden 124 Teile N-Methylolchloracetamid zu. Nach beendeter Amidomethylierung tropft man die Lösung auf Eis/Wasser und saugt das farblose Produkt der Formel

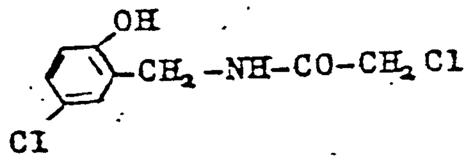

ab und wäscht mit Wasser neutral.

b) Das phenol aus Stufe a) wird in 300 Teilen Schwefelsäure bei 0°C gelöst und durch Zutropfen von 75 Teilen 65 %iger Salpetersäure nitriert. Man läßt auf Raumtemperatur kommen und tropft die Lösung auf Eis/Wasser. Nach dem Abfiltrieren und Waschen mit Wasser erhält man in sehr guter Ausbeute das gelbe o-Nitrophenol der Formel

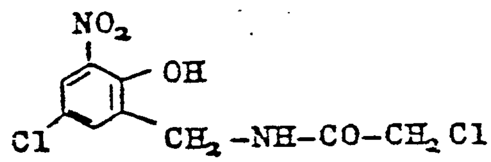

Das $^1H$-N-NMR-Spektrum bestätigt die angegebene Struktur; ($D_6$-DMSO): $\delta$ = 4,2 ppm (s, 2H, $CH_2$), $\delta$ = 4,35 ppm (d, 2H, $CH_2$), $\delta$ = 7,55 und 7,95 ppm (dd, 2H, aromat. CH),
$\delta$ = 8,8 ppm (t, 1H, NH).

c) Nach Verseifung der Amidgruppe analog Beispiel 40) und Acetylierung mit Acetanhydrid analog Beispiel 41) erhält man nach Reduktion entsprechend den Angaben in Beispiel 48) das o-Aminophenol der Formel

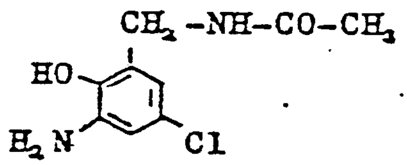

welches direkt zur Farbstoffsynthese eingesetzt werden kann. $^1H$-NMR-Spektrum ($D_6$-DMSO): $\delta$ = 1,95 ppm (s, 3H, $CH_3$), $\delta$ = 4,35 ppm (d, 2H, $CH_2$), $\delta$ = 7,55 und 7,92 ppm (dd, 2H, aromat. C-H)

**Beispiel 47**

Verwendet man 21,5 Teile des Amins aus Beispiel 46 c) anstelle des Amins 4-Methyl-(6-N-acetylaminomethyl)-2-amino-phenol in Beispiel 1) und verfährt nach den Angaben in Beispiel 1) so erhält man den Farbstoff der Formel

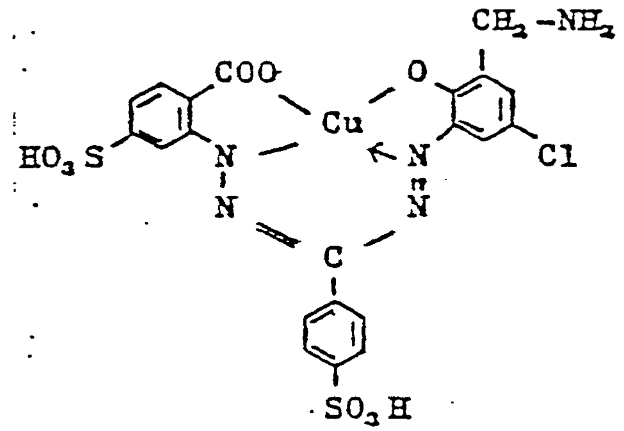

Die Acylierung der Farbbase nach den Angaben in Beispiel 2) ergibt den blauen Reaktivfarbstoff der Formel

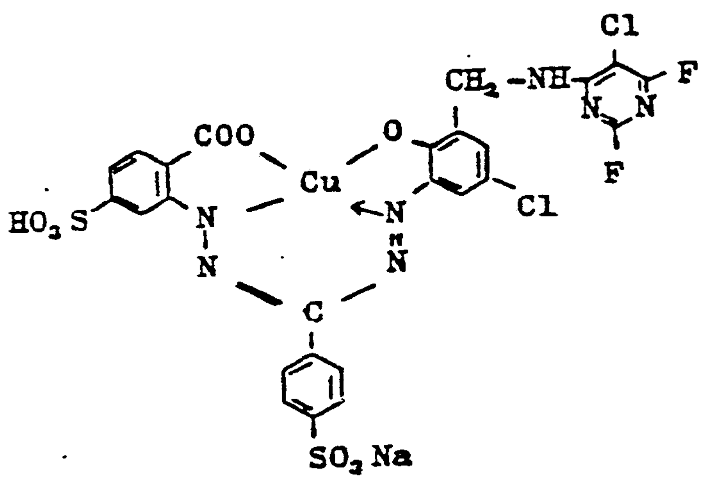

der Baumwolle in kräftigen blauen Tönen mit sehr guten Echtheiten färbt.
λ(max) in $H_2O$: 615 mm

**Beispiel 48**

a) Man löst 143,5 Teile 2-Amino-4-chlorphenol in 500 ml Schwefelsäure-Monohydrat (100 %ige $H_2SO_4$). Nach Abkühlen auf ca. 5°C werden über etwa 30 Minuten 124 Teile N-Methylolchloracetamid zugegeben. Nach beendeter Aminomethylierung tropft man die Lösung auf Eis/Wasser und saugt das ausgefallene produkt ab. Dies wird mit Wasser säurefrei gewaschen und ist das Salz des Amins der Formel

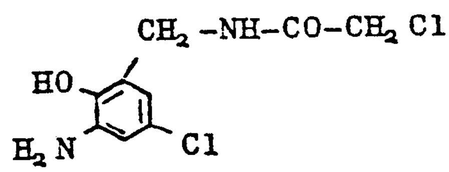

Dieses kann in dieser Form analog dem Beispiel 53) diazotiert und zu Formazanen (Beispiel 53) umgesetzt werden. $^1H$ -NMR-Spektrum ($D_6$-DMSO): δ = 3,65 ppm (s, 2H, $CH_2$), δ =4,4 ppm (d, 2H, $CH_2$), δ = 7,7-7,9 ppm (dd, 2H, aromat. C-H),δ = 8,75 ppm (t, 1H, NH).

b) Rührt man das in a) erhaltene Aminophenol in Wasser an und setzt bei pH = 7 - 8 mit 126 Teilen Natriumsulfit, zuerst bei 60° C und dann noch kurz bei 80° C um, so erhält man nach Abkühlen und Ansäuern mit konzentrierter Salzsäure in sehr guter Ausbeute das Aminophenol

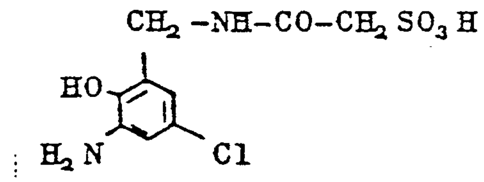

Die kann analog Beispiel 47) zu Formazanen umgesetzt werden.

**Beispiel 49**

Man löst 189 Teile 3-Amino-4-hydroxybenzolsulfonsäure im Gemisch aus 300 ml Schwefelsäuremonohydrat und 300 ml 20 %igem Oleum bei ca. 5° C. über ca. 20 Minuten werden 124 g N-Methylolchloracetamid zugegeben. Nach 12 bis 15 Stunden Rühren bei Raumtemperatur wird die Lösung auf 2000 Teile Eis/$H_2O$ getropft und man saugt das ausgefallene Amin der Formel

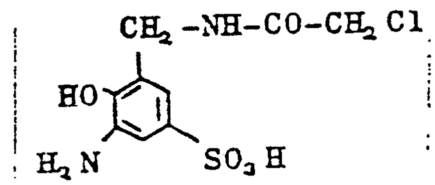

ab. $^1H$ -NMR-Spektrum ($D_6$-DMSO): $\delta$= 4,2 ppm (s, 2H, $CH_2$), $\delta$ = 4,35 ppm (d, 2H, $CH_2$), $\delta$= 7,5 ppm (d, 2H, aromat. C-H)
MS (FAB): m/e = 295 $(M + H)^+$, m/e =202 $(M\text{-}NHCOCH_2Cl)^+$
m/e = 260 $(M\text{-}Cl)^+$, m/e = 261 $(M + H - Cl)^+$

**Beispiel 50**

Setzt man 29,5 Teile des in Beispiel 49 gewonnenen o-Aminophenols in salzsaurer Lösung in üblicher Weise mit 6,9 Teilen Natriumnitrit bei 0 - 5° C um und kuppelt auf 32 Teile des Hydrazons aus 2-Carboxy-phenylhydrazin-5-sulfonsäure und Benzaldehyd analog den Angaben in Beispiel 1), so erhält man nach Kupferung und Verseifung das Formazan der Formel

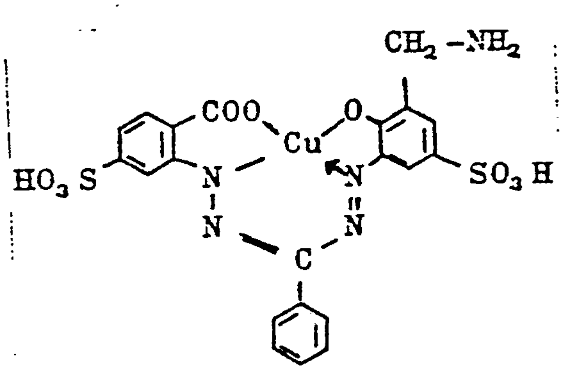

Die Acylierung der Farbbase nach den Angaben in Beispiel 2) ergibt den blauen Reaktivfarbstoff der Formel

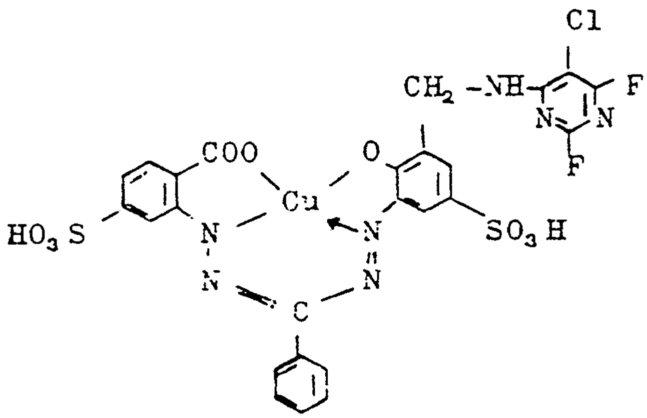

der Baumwolle in kräftigen, leicht grünstichig blauen Tönen mit sehr guten Echtheiten färbt.
λ(max) in $H_2O$: 608 mm

**Patentansprüche**

1. Schwermetallhaltige Formazanfarbstoffe der allgemeinen Formel

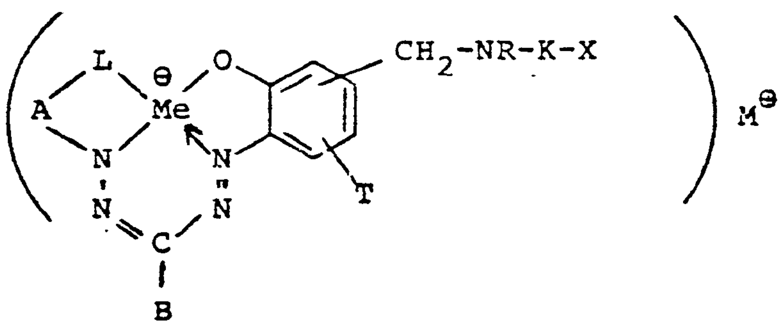

(1)

in welcher
A = gegebenenfalls substituiertes Phenylen oder gegebenenfalls substituiertes Naphthylen,
B = Wasserstoff, Cyan,
gegebenenfalls substituiertes Alkyl ($C_1$-$C_8$)
gegebenenfalls substituiertes Alkylen ($C_2$-$C_8$)
gegebenenfalls substituiertes phenyl
gegebenenfalls substituiertes Naphthyl
gegebenenfalls substituierter heterocyclischer Rest
Me = Kupfer oder Nickel
L = Sauerstoffatom oder die Carboxylgruppe,
wobei sich die Bindung A - L in ortho-Stellung zur Bindung A - N befindet.
M = Wasserstoffatom oder ein Metalläquivalent
R = Wasserstoff oder Alkyl ($C_1$-$C_4$)
K = direkte Bindung oder ein zweiwertiges Brückenglied,
T = Alkyl ($C_1$-$C_8$), gegebenenfalls substituiertes phenyl, Halogen, Alkoxy ($C_1$-$C_4$), Carboxy oder $SO^3H$,
X = nichtreaktiver Carbonyl- oder Sulfonylrest oder Monofluortriatinyl-, Trihalogenpyrimidinyl-, Dihalogenpyrimidinyl-, 2,3-Dichlorchinoxalin-6-Cabonyl-, 2,3-Dichlorchinoxalin-6-Sulfonylrest oder aliphatisches Reaktivrest wobei die Reste A und/oder B mindestens eine wasserlöslichmachende Gruppe enthalten.

2. Farbstoffe der Formel (2)

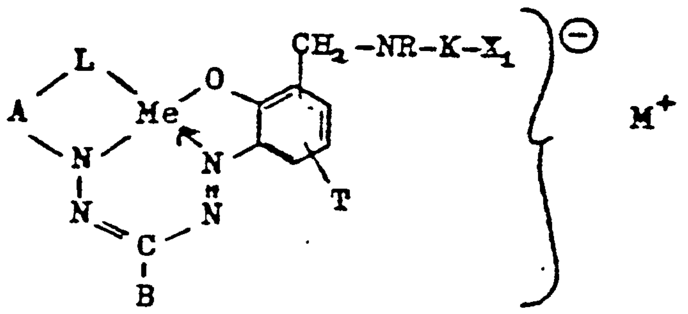

(2)

worin A, B, Me, L, M, T, R und K die in Anspruch 1 angegebene Bedeutung haben und $X_1$ den Monofluortriazinyl-, Trihalogenpyrimidinyl-, Dihalogenpyrimidinyl-, 2,3-Dichlorchinoxalin-6-carbonyl-, 2,3-Dichlor-chinoxalin-6-sulfonylrest oder aliphatischer Reaktivrest bedeutet.

3. Farbstoffe der Formel (3)

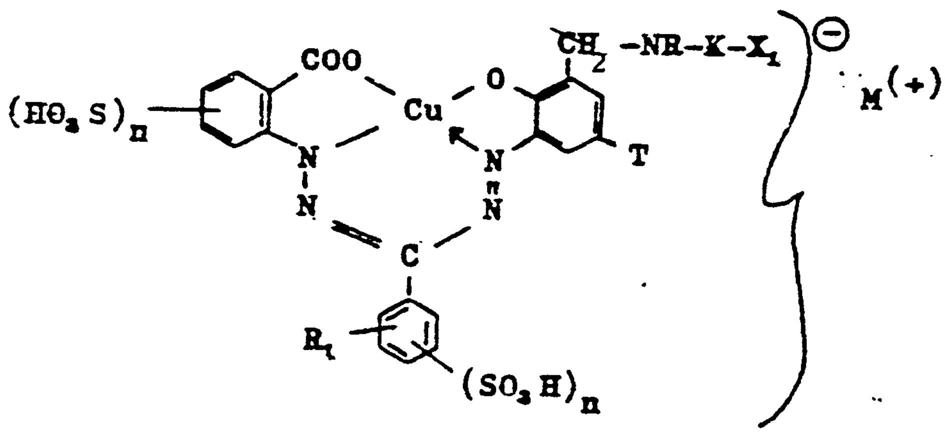

(3)

worin
R,K,M,$X_1$ und T die in Anspruch 2 angegebene Bedeutung haben und
Cu Kupfer,
n eine Zahl zwischen 0 und 2,
$R_1$ ein Wasserstoffatom oder ein Substituent aus der Gruppe Halogen, Methyl, Ethyl, Methoxy, Ethoxy, Carboxy, Carbomethoxy, Carboethoxy- und Nitro bedeutet.

4. Farbstoffe der Formel (4)

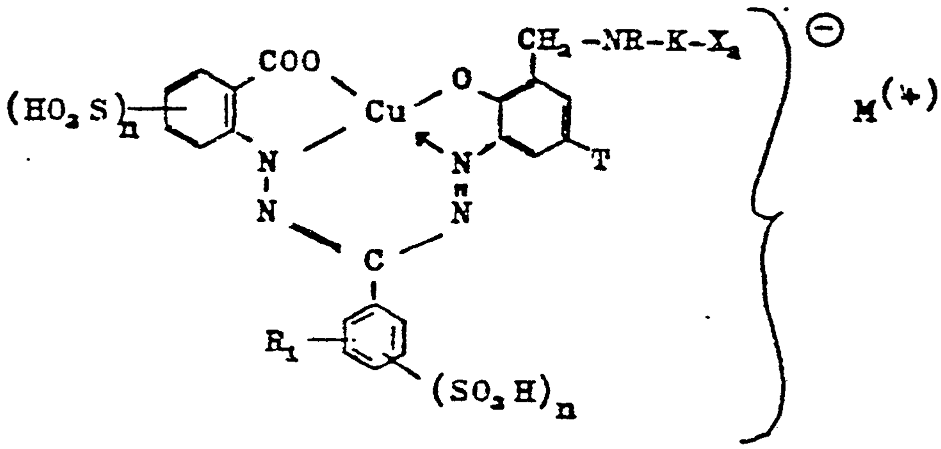

(4)

worin
R,K,M,n,$R_1$ und T die in Anspruch 3 angegebene Bedeutung haben und
$X_2$ Monofluortriazinyl, Trihalogenpyrimidyl, Dihalogenpyrimidinyl-, wie Trichlor-, Difluormonochlor, Dichlor-, Monofluormonochlor-, 2,3-Dichlorchinoxalin-6-carbonyl oder einen reaktiven aliphatischen Rest bedeutet.

5. Verfahren zur Herstellung der Farbstoffe des Anspruchs 1, dadurch gekennzeichnet, daß man eine aromatische Hydrazonverbindung der allgemeinen Formel (5)

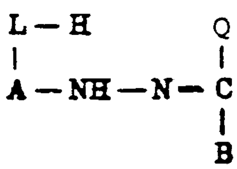

(5)

in welcher
A, B, L die in Anspruch 1 genannten Bedeutungen haben und
Q Wasserstoff oder einen durch die Azokupplung ersetzbaren Substituenten darstellt,
mit der Diazoniumverbindung eines aromatischen Amins der Formel (6)

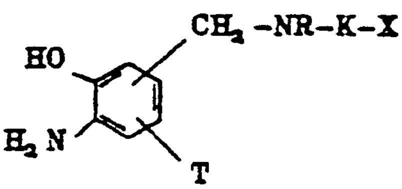

(6)

in welcher
R, K, X und T die in Anspruch 1 angegebene Bedeutung besitzen und mit einem kupfer- oder nickelabgebenden Mittel umsetzt.

6. Verfahren zur Herstellung der Farbstoffe des Anspruchs 1, dadurch gekennzeichnet, daß man Farbstoffe der Formel (7)

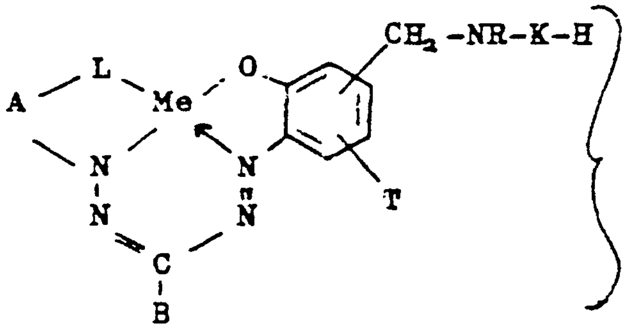

$M^{(+)}$ (7)

worin
A, B, L, Me, T, K und M die in Anspruch 1 angegebene Bedeutung haben, mit einer Acylkomponente der Formel Y-X, worin
X die in Anspruch 1 angegebene Bedeutung hat und
Y für eine abspaltbare Gruppe steht, unter Abspaltung von HY umsetzt.

7. Amine der Formel (6)

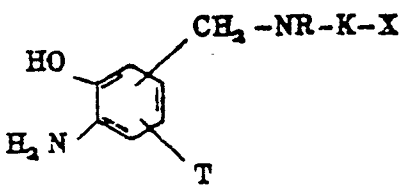

(6)

worin
R, T, K und X die in Anspruch 1 angegebene Bedeutung haben.

8. Verfahren zur Herstellung der Amine (6) des Anspruchs 7, dadurch gekennzeichnet, daß man o-Nitrophenolderivate der allgemeinen Formel (8)

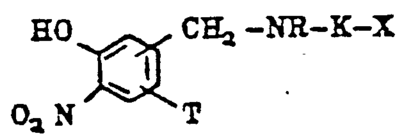

(8)

in welcher
T, R, K und X die in Anspruch 1 angegebene Bedeutung haben,
reduziert.

9. Verfahren zur Herstellung der Amine (6) des Anspruchs 7, dadurch gekennzeichnet, daß man o-Aminophenole der allgemeinen Formel (9)

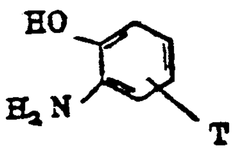

in welcher T die in Anspruch 1 angegebene Bedeutung hat, mit N-Methylolverbindungen umsetzt.

10. Verwendung der Farbstoffe der Ansprüche 1 bis 4 zum Färben und Bedrucken von Fasermaterialien.

**Claims**

1. Heavy-metal-containing formazan dyestuffs of the general formula

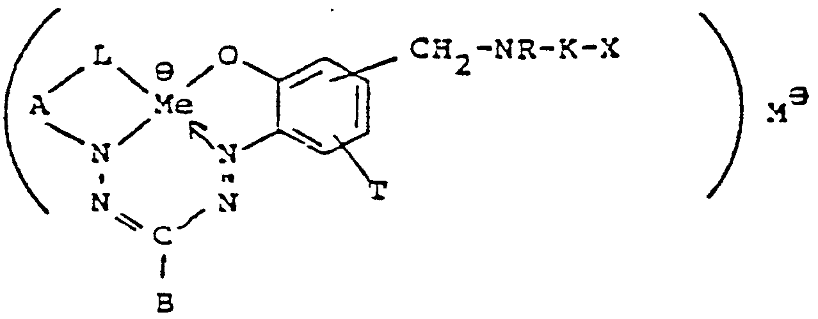

(1)

in which
A = optionally substituted phenylene or optionally substituted naphthylene,
B = hydrogen, cyano, optionally substituted alkyl ($C_1$-$C_8$), optionally substituted alkylene ($C_2$-$C_8$)' optionally substituted phenyl, optionally substituted naphthyl or an optionally substituted heterocyclic radical,
Me = copper or nickel,
L = an oxygen atom or the carboxyl group and the bond of A-L is in ortho-position relative to the bond of A-N,
M = a hydrogen atom or one equivalent of a metal,
R = hydrogen or alkyl ($C_1$-$C_4$),
K = a direct bond or a divalent bridge member,
T = alkyl ($C_1$-$C_8$), optionally substituted phenyl, halogen, alkoxy ($C_1$-$C_4$), carboxyl or $SO_3H$,
X = a non-reactive carbonyl or sulphonyl radical or a monofluorotriazinyl, trihalogenopyrimidinyl, dihalogenopyrimidinyl, 2,3-dichloroquinoxaline-6-carbonyl, 2,3-dichloroquinoxaline-6-sulphonyl radical or an aliphatic reactive radical,
and the radicals A and/or B contain at least one water-solubilising group.

2. Dyestuffs of the formula (2)

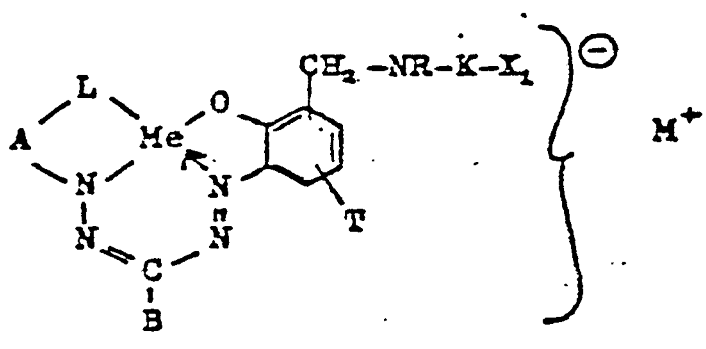

(2)

wherein
A, B, Me, L, M, T, R and K have the meaning given in Claim 1 and
$X_1$ denotes the monofluorotriazinyl, trihalogenopyrimidinyl, dihalogenopyrimidinyl, 2,3-dichloroquinoxaline-6-carbonyl, 2,3-dichloroquinoxaline-, 6-sulphonyl radical or an aliphatic reactive radical.

3. Dyestuffs of the formula (3)

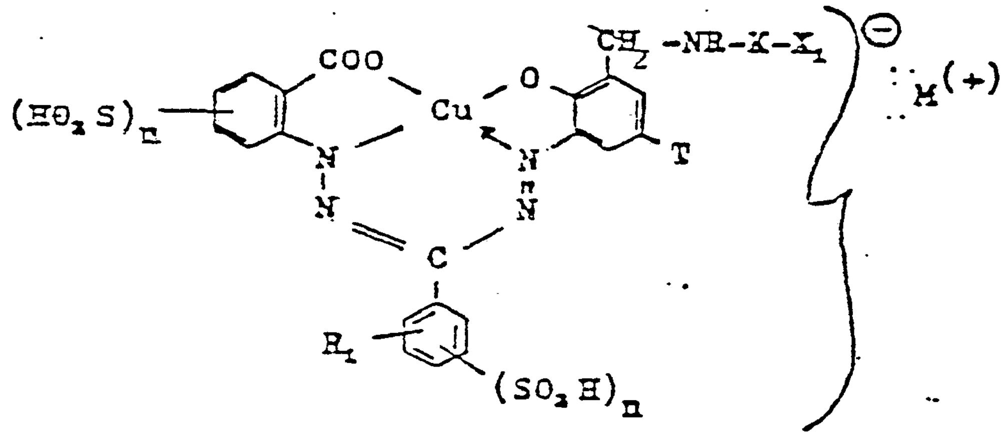

(3)

wherein
R, K, M, $X_1$ and T have the meaning given in Claim 2 and
Cu denotes copper,
n denotes a number between 0 and 2, and
$R_1$ denotes a hydrogen atom or a substituent
from the group comprising halogen, methyl, ethyl, methoxy, ethoxy, carboxyl, carbomethoxy, carboethoxy and nitro.

4. Dyestuffs of the formula (4)

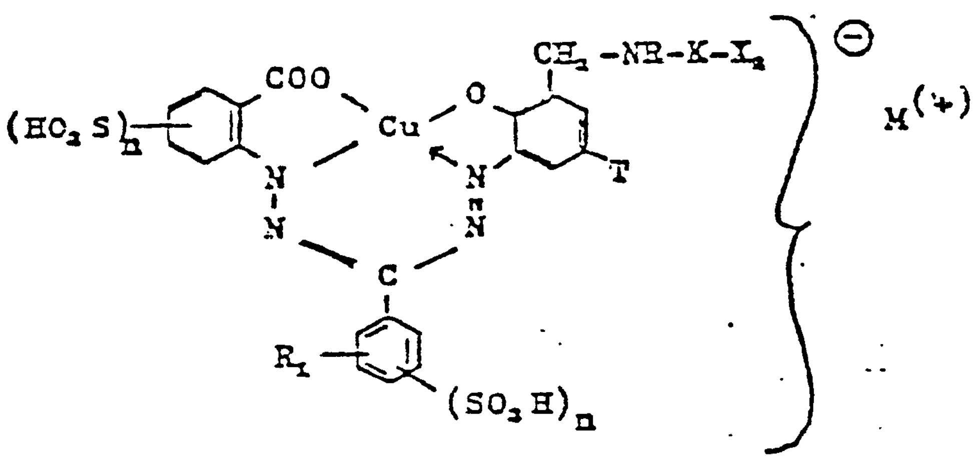

(4)

wherein
R, K, M, n, $R_1$ and T have the meaning given in Claim 3 and
$X_2$ denotes monofluorotriazinyl, trihalogenopyrimidyl, dihalogenopyrimidinyl, such as trichloro-, difluoromonochloro, dichloro-, monofluoromonochloro-, 2,3-dichloroquinoxaline-6-carbonyl or a reactive aliphatic radical.

5. Process for preparing the dyestuffs of Claim 1, characterised in that an aromatic hydrazone compound of the general formula (5)

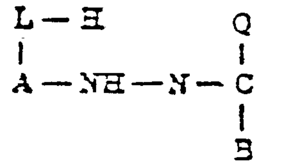

(5)

in which
A, B and L have the meanings mentioned in Claim 1 and
Q represents hydrogen or a substituent replaceable by azo coupling,
is reacted with the diazonium compound of an aromatic amine of the formula (6)

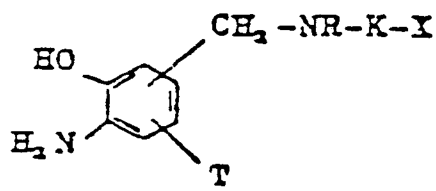

(6)

in which
R, K, X and T have the meaning given in Claim 1, and with a copper- or nickel-donating agent.

6. Process for preparing the dyestuffs of Claim 1, characterised in that dyestuffs of the formula (7)

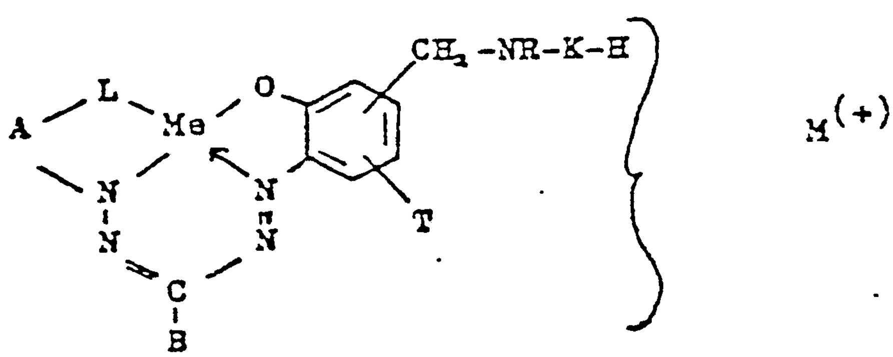

(7)

wherein
A, B, L, Me, T, K and M have the meaning given in Claim 1,
are reacted with an acyl component of the formula Y-X wherein
X has the meaning given in Claim 1 and
Y represents a detachable group with elimination of HY.

7. Amines of the formula (6)

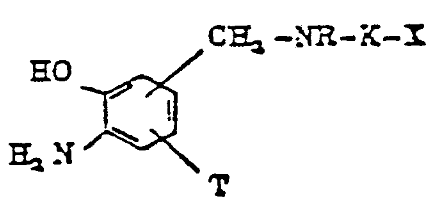

(6)

wherein
R, T, K and X have the meaning given in Claim 1.

8. Process for preparing the amines (6) of Claim 7, characterised in that o-nitrophenol derivatives of the general formula (8)

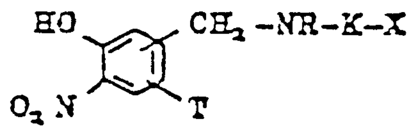

(8)

in which

T, R, K and X have the meaning given in Claim 1, are reduced.

9. Process for preparing the amines (6) of Claim 7, characterised in that o-aminophenols of the general formula (9)

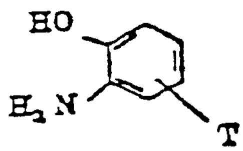

in which

T has the meaning given in Claim 1, are reacted with N-methylol compounds.

10. The use of the dyestuffs of Claims i to 4 for dyeing and printing fibre materials.

## Revendications

1. Colorants du type formazane contenant un métal lourd, de formule générale

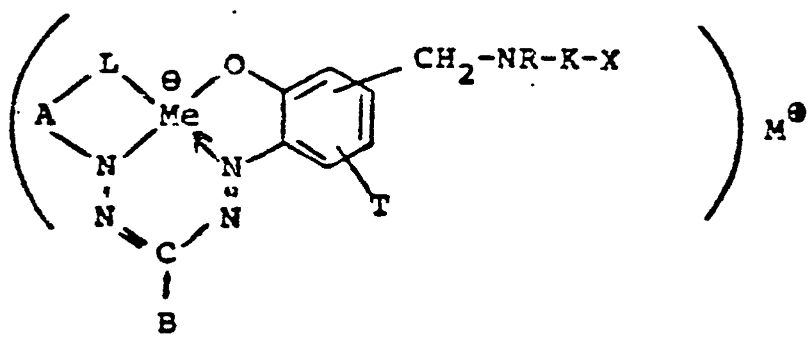

(1)

dans laquelle

A représente un groupe phénylène éventuellement substitué ou un groupe naphtylène éventuellement substitué,

B désigne l'hydrogène, le groupe cyano, un groupe alkyle en $C_1$ à $C_8$ éventuellement substitué, un groupe alkylène en $C_2$ à $C_8$ éventuellement substitué, un groupe phényle éventuellement substitué, un groupe naphtyle éventuellement substitué, un reste hétérocyclique éventuellement substitué

Me représente le cuivre ou le nickel

L est un atome d'oxygène ou le groupe carboxyle,

la liaison A - L se trouvant en position ortho par rapport à la liaison A - N,

M désigne un atome d'hydrogène ou un équivalent métallique

R désigne l'hydrogène ou un groupe alkyle en $C_1$ à $C_4$

K est une liaison directe ou un élément divalent de pontage,

T est un groupe alkyle en $C_1$ à $C_8$, un groupe phényle éventuellement substitué, un halogène, un groupe alkoxy

en $C_1$ à $C_4$, un groupe carboxy ou le groupe $SO_3H$,

X est un reste carbonyle ou sulfonyle non réactif ou un reste monofluorotriazinyle, trihalogéno-pyrimidinyle, dihalogénopyrimidinyle, 2,3-dichloroquinoxaline-6-carbonyle, 2,3-dichloroquinoxaline-6-sulfonyle ou un reste réactif aliphatique, les restes A et/ou B comportant au moins un groupe hydrosolubilisant.

2. Colorants de formule (2)

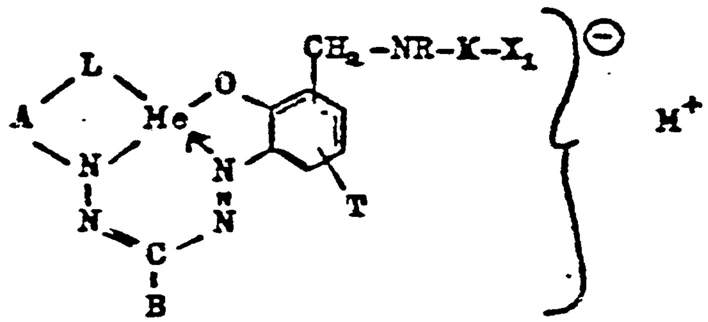

(2)

dans laquelle A, B, Me, L, M, T, R et K ont la définition indiquée dans la revendication 1 et

$X_1$ représente le reste monofluorotriazinyle, un reste trihalogénopyrimidinyle, dihalogénopyrimidinyle, le reste 2,3-dichloroquinoxaline-6-carbonyle, 2,3-dichloro-quinoxaline-6-sulfonyle ou un reste réactif aliphatique.

3. Colorants de formule (3)

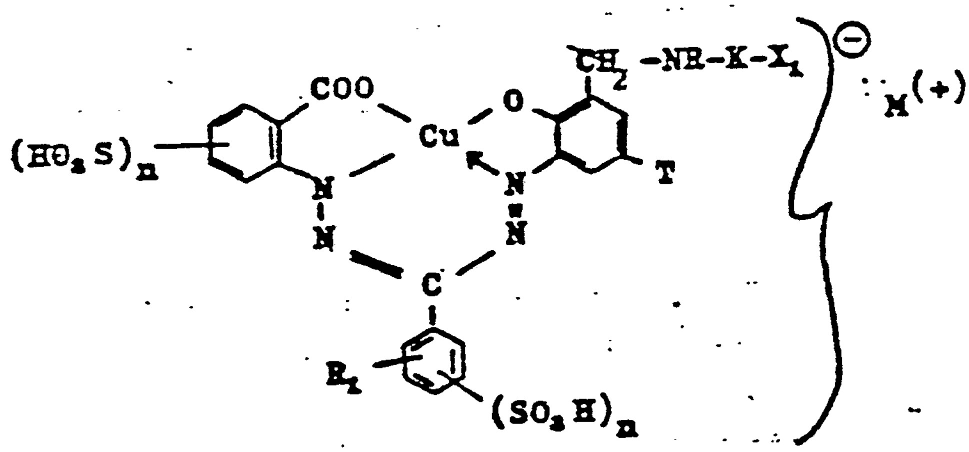

(3)

dans laquelle

R, K, M, $T_1$ et T ont la définition indiquée dans la revendication 2 et

Cu désigne le cuivre,

n est un nombre compris entre 0 et 2,

$R_1$ est un atome d'hydrogène ou un substituant du groupe halogène, méthyle éthyle, méthoxy, éthoxy, carboxy, carbométhoxy, carbéthoxy et nitro.

4. Colorants de formule (4)

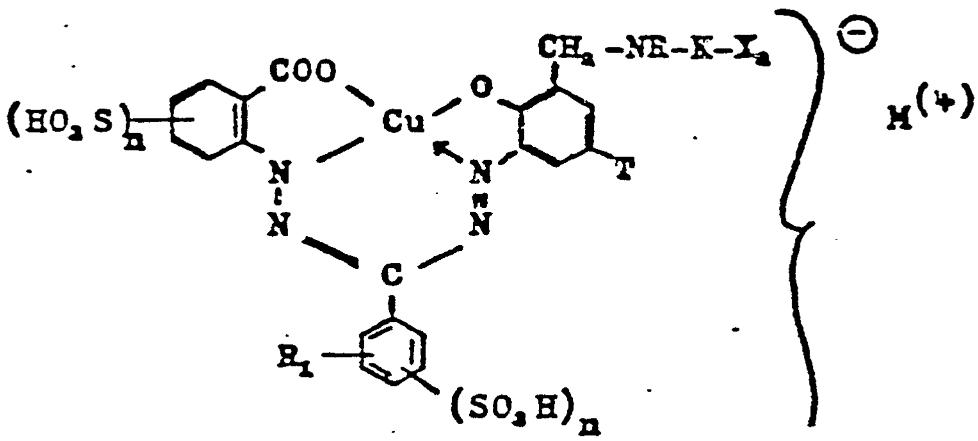

(4)

dans laquelle
R, K, M, n, $R_1$ et T ont la définition indiquée dans la revendication 3 et
$X_2$ est un reste monofluorotriazinyle, trihalogénopyrimidyle, dihalogénopyrimidinyle, tel que trichloro-, difluoromonochloro-, dichloro-, monofluoromonochloropyrimidinyle, 2,3-dichloroquinoxaline-6-carbonyle ou un reste aliphatique réactif.

5. Procédé de production des colorants suivant la revendication 1, caractérisé en ce qu'on fait réagir un composé hydrazonique aromatique de formule générale (5)

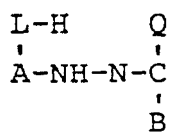

(5)

dans laquelle
A, B, L ont les définitions mentionnées dans la revendication 1 et
Q désigne l'hydrogène ou un substituant remplaçable par copulation azoïque,
avec le composé de diazonium d'une amine aromatique de formule (6)

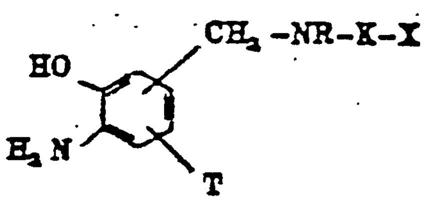

(6)

dans laquelle
R, K, X et T possèdent la définition indiquée dans la revendication 1 et avec un agent cédant du cuivre ou du nickel.

6. Procédé de production des colorants suivant la revendication 1, caractérisé en ce qu'on fait réagir des colorants de formule (7)

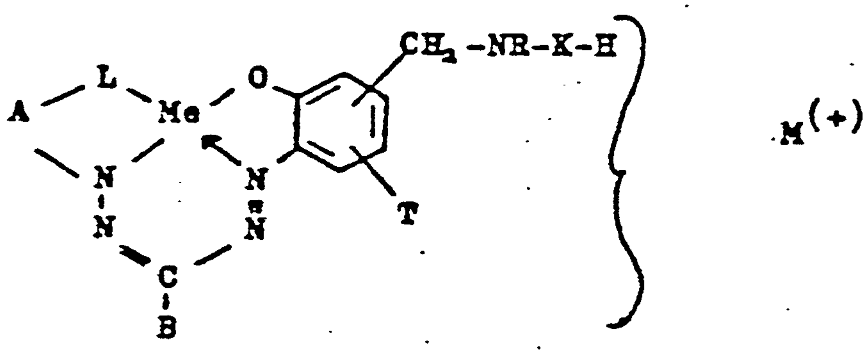

(7)

dans laquelle
A, B, L, Me, T, K et M ont la définition indiquée dans la revendication 1, avec un composant acylique de formule Y-X, dans laquelle
X a la définition indiquée dans la revendication 1 et
Y désigne un groupe éliminable, avec départ de HY.

7. Amines de formule (6)

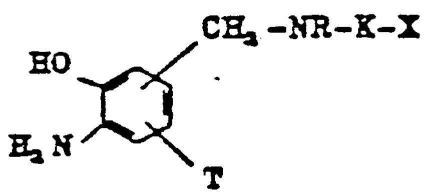

(6)

dans laquelle
R, T, K et X ont la définition indiquée dans la revendication 1.

8. Procédé de production des amines (6) suivant la revendication 7, caractérisé en ce qu'on réduit des dérivés o-nitrophénoliques de formule générale (8)

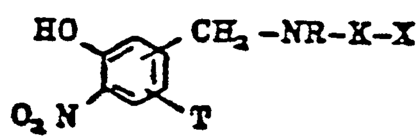

(8)

dans laquelle
T, R, K et X ont la définition indiquée dans la revendication 1.

9. Procédé de production des amines (6) suivant la revendication 7, caractérisé en ce qu'on fait réagir des o-aminophénols de formule générale (8)

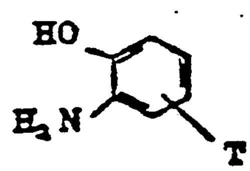

dans laquelle T a la définition indiquée dans la revendication 1, avec des composés N-méthyloliques.

10. Utilisation des colorants suivant les revendications 1 à 4 pour la teinture et l'impression de matières fibreuses.